# EUROPEAN PATENT SPECIFICATION

(11) **EP 2 423 796 B1**
(45) Date of publication and mention of the grant of the patent: **02.10.2019**
(21) Application number: 11006818.6
(22) Date of filing: 19.08.2011
(51) Int. Cl.: G06F 3/0338, G06F 3/0481, G06F 3/0485, G06F 3/0488, G06F 3/0346, H04M 1/725

(54) **Mobile terminal and displaying method thereof**
Tragbares Endgerät und Anzeigeverfahren davon
Terminal mobile et son procédé d'affichage

(30) Priority: 24.08.2010 KR 20100081920; 24.08.2010 KR 20100081916; 24.08.2010 KR 20100081917; 24.08.2010 KR 20100081919; 24.08.2010 KR 20100081918
(43) Date of publication of application: 29.02.2012
(73) Proprietor: LG Electronics Inc., SEOUL, 07336 (KR)
(72) Inventor: Kim, Hyunjun, Seoul, 153-801 (KR); Kim, Meeyoung, Seoul, 153-801 (KR); Lim, Jihyung, Seoul, 153-801 (KR); Ko, Dongseuck, Seoul, 153-801 (KR); Ahn, Sunju, Seoul, 153-801 (KR); Lee, Woojae, Seoul, 153-801 (KR); Kim, Hyoungjoo, Seoul, 153-801 (KR); Kim, Youngjin, Seoul, 153-801 (KR); Kim, Younghee, Seoul, 153-801 (KR); Kwon, Jisun, Seoul, 153-801 (KR); Lee, Namsu, Seoul, 153-801 (KR)
(74) Representative: Ter Meer Steinmeister & Partner

(56) References cited:
- DE-A1- 10 218 543
- JP-A- 2011 160 326
- US-A1- 2007 176 898
- US-A1- 2009 262 078
- US-A1- 2010 146 460

## Description

### BACKGROUND

### 1. Field

Embodiments may relate to a mobile terminal and a control method thereof to selectively detect or sense a motion of a body of the mobile terminal.

### 2. Background

Functions of terminals such as personal computers, laptop computers, cellular phones and the like are diversified. Terminals may be in a form of a multimedia player having multiple functions of capturing pictures or moving images, playing music, moving image files and games and/or receiving broadcasting programs.

Terminals may be classified as mobile terminals or stationary terminals. The mobile terminals may be classified as handheld terminals and vehicle mount terminals based on whether a user may personally carry the terminal. To support and enhance functions of a terminal, a structural part and/or a software part of the terminal
may be improved. A variety of recent terminals (including mobile terminals) may provide more complex and various functions.

US 2010/146460 A1 discloses a system, method and computer program that utilizes motion detection circuitry to dynamically update displayed labels on one or more key input regions. According to one aspect, the number of key input regions is substantially less than the number of keys on a conventional keypad and the labels on the key input regions dynamically change based on the detected motion of the motion detection circuitry.

US 2007/176898 A1 discloses the use of motion sensing to perform a sophisticated command control and date input into a portable device. A motion sensor is embedded or fixedly attached to a portable device to measure movement, motion or tilt of the device when the portable device is used to air-write or make gestures.

US 2009/262078 A1 discloses specific ambient and user behavior sensing systems and methods. The improvements and special functions include, among others, locking/unlocking the keypad and/or activating the display dependent on a device inclination relative to its longitudinal and/or lateral axis.

### BRIEF DESCRIPTION OF THE DRAWINGS

Arrangements and embodiments may be described in detail with reference to the following drawings in which like reference numerals refer to like elements and wherein:
FIG. 1 is a block diagram of a mobile terminal according to an embodiment;
FIG. 2 is a front perspective view of the mobile terminal shown in FIG. 1;
FIG. 3 is a rear perspective view of the mobile terminal shown in FIG. 1;
FIG. 4 is a cross-sectional view of a key button shown in FIG. 1;
FIG. 5 is a graph showing an operation of the key button shown in FIG. 4;
FIG. 6 is a graph showing an operation of the key button shown in FIG. 4;
FIGs. 7 and 8 illustrate a user input operation of the mobile terminal shown in FIG. 1;
FIG. 9 illustrates a user input operation of the mobile terminal shown in FIG. 1 according to an embodiment;
FIG. 10 is a flowchart showing an operation of the mobile terminal shown in FIG. 1;
FIG. 11 illustrates motions of the mobile terminal shown in FIG. 1;
FIGs. 12 and 13 are views for explaining an operation of the mobile terminal shown in FIG. 10, according to an embodiment;
FIG. 14 is a view for explaining an operation of the mobile terminal shown in FIG. 10, according to an embodiment;
FIG. 15 is a view for explaining an operation of the mobile terminal shown in FIG. 10, according to an embodiment;
FIGs. 16 and 17 are views for explaining an operation of the mobile terminal shown in FIG. 10, according to an embodiment;
FIG. 18 is a graph illustrating a selection indicator moving velocity according to a tilting degree of the body of the mobile terminal shown in FIG. 1;
FIG. 19 is a graph illustrating a selection indicator moving velocity according to a tilting degree of the body of the mobile terminal shown in FIG. 1;
FIG. 20 shows a selection indicator moving distance according to a tilting direction of the body of the mobile terminal shown in FIG. 1;
FIG. 21 is a flowchart showing an operation of displaying a selection indicator shown in FIG. 8;
FIG. 22 shows tilting degrees of the body of the mobile terminal shown in FIG. 1;
FIG. 23 is a graph showing a variation in a selected area according to the tilting degrees of the body of the mobile terminal shown in FIG. 22;
FIGs. 24 and 25 show a variation in a selected area according to a tilting degree of the body of the mobile terminal;
FIG. 26 illustrates a variation in a selected area according to a tilting degree of the body of the mobile terminal;
FIG. 27 is a graph showing a variation in a selected area according to a tilting degree and a tilting maintaining time of the mobile terminal;
FIG. 28 is a flowchart showing an operation of displaying the selection indicator shown in FIG. 10;
FIG. 29 shows a third user input of the mobile terminal described with reference to FIG. 28;
FIG. 30 is a graph showing a sensing result of a sensing unit according to the third user input of the mobile terminal;
FIG. 31 shows a web page to be displayed on a display of the mobile terminal shown in FIG. 1;
FIGs. 32, 33, 34 and 35 show an operation of displaying the web page on the mobile terminal;
FIG. 36 is a flowchart showing an operation of displaying an indicator on the mobile terminal;
FIGs. 37 and 38 show an operation of displaying an indicator according to an embodiment;
FIG. 39 shows an operation of displaying the indicator according to an embodiment;
FIG. 40 illustrates an operation of the mobile terminal shown in FIG. 1; and
FIG. 41 illustrates an operation of the mobile terminal shown in FIG. 1.

### DETAILED DESCRIPTION

Arrangements and embodiments may be described more fully with reference to the accompanying drawings, in which exemplary embodiments are shown. Arrangements and embodiments may be embodied in many different forms and should not be construed as being limited to the arrangements and embodiments set forth herein. Rather, arrangements and embodiments may be provided so that the disclosure will be thorough and complete, and will fully convey the concept to those skilled in the art.

A mobile terminal may be described with reference to the accompanying drawings. In the following description, suffixes "module" and "unit" may be given to components of the mobile terminal in consideration of only facilitation of description and do not have meanings or functions discriminated from each other.

The mobile terminal as described herein may include a cellular phone, a smart phone, a laptop computer, a digital broadcasting terminal, personal digital assistants (PDA), a portable multimedia player (PMP), a navigation system and/or etc.

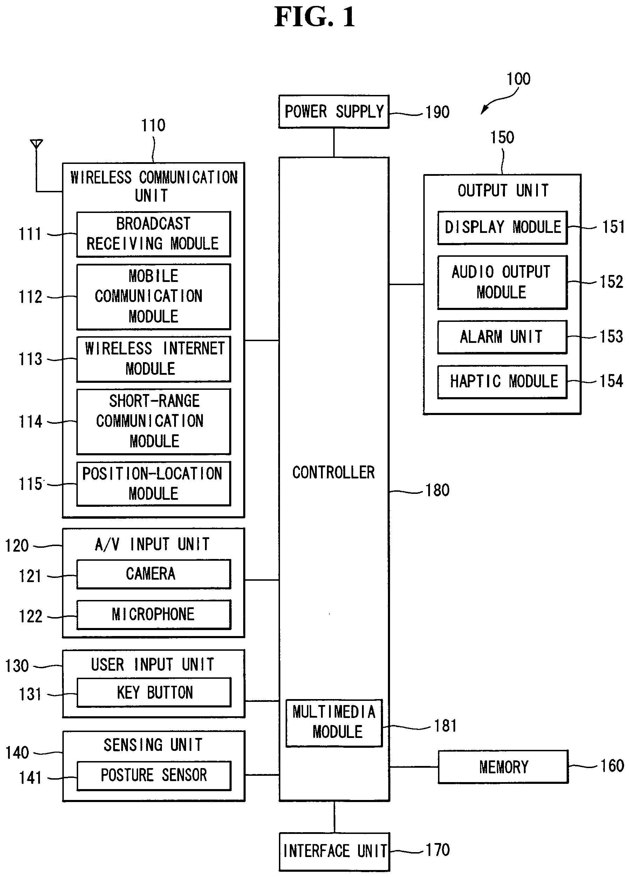

FIG. 1 is a block diagram of a mobile terminal according to an embodiment. Other embodiments, configurations and arrangements may also be provided. As shown in FIG. 1, the mobile terminal 100 may include a radio communication unit 110, an audio/video (A/V) input unit 120, a user input unit 130, a sensing unit 140, an output unit 150, a memory 160, an interface 170, a controller 180, and a power supply 190. Not all of the components shown in FIG. 1 may be essential parts and a number of components included in the mobile terminal 100 may vary. The components of the mobile terminal 100 may now be described.

The radio communication unit 110 may include at least one module that enables radio communication between the mobile terminal 100 and a radio communication system or between the mobile terminal 100 and a network in which the mobile terminal 100 is located. For example, the radio communication unit 110 may include a broadcasting receiving module 111, a mobile communication module 112, a wireless Internet module 113, a local area communication module 114, and a position-location (or position) module 115.

The broadcasting receiving module 111 may receive broadcasting signals and/or broadcasting related information from an external broadcasting management server through a broadcasting channel. The broadcasting channel may include a satellite channel and a terrestrial channel, and the broadcasting management server may be a server that generates and transmits broadcasting signals and/or broadcasting related information or a server that receives previously created broadcasting signals and/or broadcasting related information and transmits the broadcasting signals and/or broadcasting related information to a terminal.

The broadcasting signals may include not only TV broadcasting signals, radio broadcasting signals, and data broadcasting signals but also signals in the form of a combination of a TV broadcasting signal and a radio broadcasting signal. The broadcasting related information may be information on a broadcasting channel, a broadcasting program or a broadcasting service provider, and may be provided even through a mobile communication network. In the latter case, the broadcasting related information may be received by the mobile communication module 112.

The broadcasting related information may exist in various forms. For example, the broadcasting related information may exist in the form of an electronic program guide (EPG) of a digital multimedia broadcasting (DMB) system or in the form of an electronic service guide (ESG) of a digital video broadcast-handheld (DVB-H) system.

The broadcasting receiving module 111 may receive broadcasting signals using various broadcasting systems. More particularly, the broadcasting receiving module 111 may receive digital broadcasting signals using digital broadcasting systems such as a digital multimedia broadcasting-terrestrial (DMB-T) system, a digital multimedia broadcasting-satellite (DMB-S) system, a media forward link only (MediaFLO) system, a DVB-H and integrated services digital broadcast-terrestrial (ISDB-T) systems. The broadcasting receiving module 111 may receive signals from broadcasting systems providing broadcasting signals other than the above-described digital broadcasting systems.

The broadcasting signals and/or broadcasting related information received through the broadcasting receiving module 111 may be stored in the memory 160. The mobile communication module 112 may transmit/receive a radio signal to/from at least one of a base station, an external terminal and a server on a mobile communication network. The radio signal may include a voice call signal, a video telephony call signal or data in various forms according to transmission and reception of text/multimedia messages.

The wireless Internet module 113 may correspond to a module for wireless Internet access and may be included in the mobile terminal 100 or may be externally attached to the mobile terminal 100. Wireless LAN (WLAN or Wi-Fi), wireless broadband (Wibro), world interoperability for microwave access (Wimax), high speed downlink packet access (HSDPA) and so on may be used as a wireless Internet technique.

The local area communication module 114 may correspond to a module for local area communication. Further, Bluetooth®, radio frequency identification (RFID), infrared data association (IrDA), ultra wideband (UWB) and/or ZigBee® may be used as a local area communication technique.

The position-location module 115 may confirm or obtain a position of the mobile terminal 100. The position-location module 115 may obtain position information by using a global navigation satellite system (GNSS). The GNSS is a terminology describing a radio navigation satellite system that revolves around the earth and transmits reference signals to predetermined types of radio navigation receivers such that the radio navigation receivers can determine their positions on the earth's surface or near the earth's surface. The GNSS may include a global positioning system (GPS) of the United States, Galileo of Europe, a global orbiting navigational satellite system (GLONASS) of Russia, COMPASS of China, and/or a quasi-zenith satellite system (QZSS) of Japan.

A global positioning system (GPS) module is a representative example of the position-location module 115. The GPS module 115 may calculate information on distances between one point or object and at least three satellites and information on a time when the distance information is measured and apply trigonometry to the obtained distance information to obtain three-dimensional position information on the point or object according to latitude, longitude and altitude at a predetermined time.

A method of calculating position and time information using three satellites and correcting the calculated position and time information using another satellite may also be used. Additionally, the GPS module 115 may continuously calculate the current position in real time and calculate velocity information using the location or position information.

As shown in FIG. 1, the AN input unit 120 may input an audio signal or a video signal and include a camera 121 and a microphone 122. The camera 121 may process image frames of still images or moving images obtained by an image sensor in a video telephony mode or a photographing mode. The processed image frames may be displayed on a display 151, which may be a touch screen.

The image frames processed by the camera 121 may be stored in the memory 160 or may be transmitted to an external device through the radio communication unit 110. The mobile terminal 100 may also include at least two cameras 121.

The microphone 122 may receive an external audio signal in a call mode, a recording mode or a speech recognition mode and process the received audio signal into electric audio data. The audio data may then be converted into a form that can be transmitted to a mobile communication base station through the mobile communication module 112 and output in the call mode. The microphone 122 may employ various noise removal algorithms (or noise canceling algorithm) for removing or reducing noise generated when the external audio signal is received.

The user input unit 130 may receive input data for controlling operations of the mobile terminal 100 from a user. The user input unit 130 may include a keypad, a dome switch, a touch pad (constant voltage/capacitance), a jog wheel, a jog switch and/or etc.

The sensing unit 140 may sense a current state of the mobile terminal 100, such as an open/close state of the mobile terminal 100, a position of the mobile terminal 100, whether a user touches the mobile terminal 100, a direction of the mobile terminal 100, and acceleration/deceleration of the mobile terminal 100, and the sensing unit 140 may generate a sensing signal for controlling operations of the mobile terminal 100. For example, in case of a slide phone, the sensing unit 140 may sense whether the slide phone is opened or closed. Further, the sensing unit 140 may sense whether the power supply 190 supplies power and/or whether the interface 170 is connected to an external device. The sensing unit 140 may include a posture sensor 141 and/or a proximity sensor.

The output unit 150 may generate visual, auditory and/or tactile output and may include the display 151, an audio output module 152, an alarm 153 (or alarm unit) and a haptic module 154. The display 151 may display information processed by the mobile terminal 100. The display 151 may display a user interface (Ul) or a graphic user interface (GUI) related to a telephone call when the mobile terminal 100 is in the call mode. The display 151 may also display a captured and/or received image, a Ul or a GUI when the mobile terminal 100 is in the video telephony mode or the photographing mode.

The display 151 may include at least one of a liquid crystal display, a thin film transistor liquid crystal display, an organic light-emitting diode display, a flexible display and a three-dimensional display. Some of these displays may be of a transparent type or a light transmissive type. That is, the display 151 may include a transparent display.

The transparent display may include a transparent liquid crystal display. The rear structure of the display 151 may also be of a light transmissive type. Accordingly, a user may see an object located behind the body of the mobile terminal 100 through the transparent area of the body of the mobile terminal 100 that is occupied by the display 151.

The mobile terminal 100 may also include at least two displays 151. For example, the mobile terminal 100 may include a plurality of displays 151 that are arranged on a single face at a predetermined distance or integrated displays. The plurality of displays 151 may also be arranged on different sides.

When the display 151 and a sensor to sense a touch (hereafter referred to as a touch sensor) form a layered structure that is referred to as a touch screen, the display 151 may be used as an input device in addition to an output device. The touch sensor may be in the form of a touch film, a touch sheet, and/or a touch pad, for example.

The touch sensor may convert a variation in pressure applied to a specific portion of the display 151 or a variation in capacitance generated at a specific portion of the display 151 into an electric input signal. The touch sensor may sense pressure of touch as well as position and area of the touch.

When the user applies a touch input to the touch sensor, a signal corresponding to the touch input may be transmitted to a touch controller. The touch controller may then process the signal and transmit data corresponding to the processed signal to the controller 180. Accordingly, the controller 180 may detect a touched portion of the display 151.

The proximity sensor of the sensing unit 140 may be located in an internal region of the mobile terminal 100, surrounded by the touch screen, and/or near the touch screen. The proximity sensor may sense an object approaching a predetermined sensing face or an object located near the proximity sensor using an electromagnetic force or infrared rays without having mechanical contact. The proximity sensor may have a lifetime longer than a contact sensor and may thus have a wide application in the mobile terminal 100.

The proximity sensor may include a transmission type photo-electric sensor, a direct reflection type photo-electric sensor, a mirror reflection type photo-electric sensor, a high-frequency oscillating proximity sensor, a capacitive proximity sensor, a magnetic proximity sensor, and/or an infrared proximity sensor. A capacitive touch screen may be constructed such that proximity of a pointer is detected through a variation in an electric field according to the proximity of the pointer. The touch screen may be classified as a proximity sensor.

For ease of convenience of explanation, an action of the pointer approaching the touch screen without actually touching the touch screen may be referred to as a proximity touch and an action of bringing the pointer into contact with the touch screen may be referred to as a contact touch. The proximity touch point of the pointer on the touch screen may correspond to a point of the touch screen at which the pointer is perpendicular to the touch screen.

The proximity sensor may sense the proximity touch and a proximity touch pattern (e.g., a proximity touch distance, a proximity touch direction, a proximity touch velocity, a proximity touch time, a proximity touch position, a proximity touch moving state, etc.). Information corresponding to the sensed proximity touch action and proximity touch pattern may then be displayed on the touch screen.

The audio output module 152 may output audio data received from the radio communication unit 110 or stored in the memory 160 in a call signal receiving mode, a telephone call mode or a recording mode, a speech recognition mode and/or a broadcasting receiving mode. The audio output module 152 may output audio signals related to functions, such as a call signal incoming tone and a message incoming tone, performed in the mobile terminal 100. The audio output module 152 may include a receiver, a speaker, a buzzer, and/or the like. The audio output module 152 may output sounds through an earphone jack. The user may hear the sounds by connecting an earphone to the earphone jack.

The alarm 153 may output a signal for indicating generation of an event of the mobile terminal 100. For example, alarms may be generated when receiving a call signal, receiving a message, inputting a key signal, and/or inputting a touch. The alarm 153 may also output signals in forms different from video signals or audio signals, for example, a signal for indicating generation of an event through vibration. The video signals or the audio signals may also be output through the display 151 or the audio output module 152.

The haptic module 154 may generate various haptic effects that the user may feel. One example of the haptic effects is vibration. An intensity and/or a pattern of a vibration generated by the haptic module 154 may also be controlled. For example, different vibrations may be combined and output or may be sequentially output.

The haptic module 154 may generate a variety of haptic effects including an effect of stimulus according to an arrangement of pins vertically moving against a contact skin surface, an effect of stimulus according to a jet force or a sucking force of air through a jet hole or a sucking hole, an effect of stimulus of rubbing the skin, an effect of stimulus according to contact of an electrode, an effect of stimulus using an electrostatic force, and an effect according to a reproduction of cold and warmth using an element capable of absorbing or radiating heat in addition to vibrations.

The haptic module 154 may not only transmit haptic effects through direct contact but may also allow the user to feel haptic effects through a kinesthetic sense of the user's fingers or arms. The mobile terminal 100 may also include a plurality of haptic modules 154.

The memory 160 may store a program for operation of the controller 180 and may temporarily store input/output data such as a phone book, messages, still images, and/or moving images. The memory 160 may also store data about vibrations and sounds in various patterns that are output from when a touch input is applied to the touch screen.

The memory 160 may include at least a flash memory, a hard disk type memory, a multimedia card micro type memory, a card type memory (such as SD or XD memory), a random access memory (RAM), a static RAM (SRAM), a read-only memory (ROM), an electrically erasable programmable ROM (EEPROM), a programmable ROM (PROM) magnetic memory, a magnetic disk and/or an optical disk. The mobile terminal 100 may also operate in relation to a web storage performing the storing function of the memory 160 on the Internet.

The interface 170 may serve as a path to external devices connected to the mobile terminal 100. The interface 170 may receive data from the external devices or power and transmit the data or power to internal components of the mobile terminal 100 or transmit data of the mobile terminal 100 to the external devices. For example, the interface 170 may include a wired/wireless headset port, an external charger port, a wired/wireless data port, a memory card port, a port for connecting a device having a user identification module, an audio I/O port, a video I/O port, and/or an earphone port.

The interface 170 may also interface with a user identification module that is a chip that stores information for an authenticating authority to use the mobile terminal 100. For example, the user identification module may be a user identify module (UIM), a subscriber identify module (SIM) and a universal subscriber identify module (USIM). An identification device (including the user identification module) may also be manufactured in the form of a smart card. Accordingly, the identification device may be connected to the mobile terminal 100 through a port of the interface 170.

The interface 170 may also be a path through which power from an external cradle is provided to the mobile terminal 100 when the mobile terminal 100 is connected to the external cradle or a path through which various command signals input by the user through the cradle are transmitted to the mobile terminal 100. The various command signals or power input from the cradle may be used as signals for confirming whether the mobile terminal 100 is correctly set in the cradle.

The controller 180 may control overall operations of the mobile terminal 100. For example, the controller 180 may perform control and processing for voice communication, data communication and/or video telephony. The controller 180 may also include a multimedia module 181 for playing multimedia. The multimedia module 181 may be included in the controller 180 (as shown in FIG. 1) or may be separated from the controller 180.

The controller 180 may perform a pattern recognition process capable of recognizing handwriting input or picture-drawing input applied to the touch screen as characters or images. The power supply 190 may receive external power and internal power and provide power required for operations of the components of the mobile terminal 100 under control of the controller 180.

According to hardware implementation, embodiments may be implemented using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and/or electrical units for executing functions. Embodiments may be implemented by the controller 180.

According to software implementation, embodiments (such as procedures or functions) may be implemented with a separate software module executing at least one function or operation. Software codes may be implemented according to a software application written in an appropriate software language. The software codes may be stored in the memory 160 and executed by the controller 180.

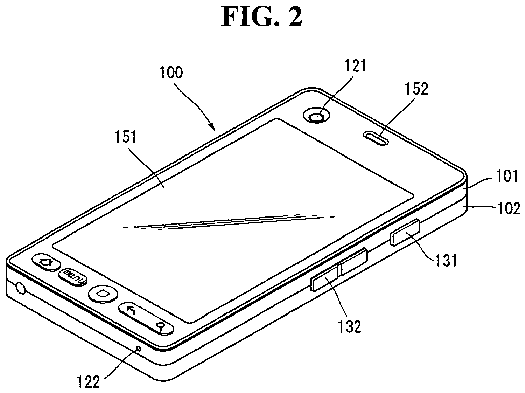

FIG. 2 is a front perspective view of the mobile terminal 100 shown in FIG. 1. Other embodiments and configurations may also be provided.

Referring to FIG. 2, the mobile terminal 100 has a bar type terminal body. However, arrangements are not limited to a bar type terminal and can be applied to terminals of various types including slide type, folder type, swing type and swivel type terminals having at least two bodies that are relatively movably combined.

The terminal body may include a case (a casing, a housing, a cover, etc.) forming an exterior of the terminal 100. In this embodiment, the case may be divided into a front case 101 and a rear case 102. Various electronic components may be arranged in a space formed between the front case 101 and the rear case 102. At least one middle case may be additionally arranged between the front case 101 and the rear case 102.

The cases may be formed of plastics through injection molding or made of a metal material such as stainless steel (STS) or titanium (Ti).

The display 151, the audio output unit 152, the camera 121, the user input unit 130, the microphone 122 and the interface 170 may be arranged in the terminal body.

The display 151 may occupy most of the main face of the front case 101. The audio output unit 152 and the camera 121 may be arranged in a region in proximity to one of both ends of the display 151 and the user input unit 130 and the microphone 122 are located in a region in proximity to the other end of the display 151. The user input unit 130 and the interface 170 may be arranged on sides of the front case 101 and the rear case 102.

The user input unit 130 may operate to receive commands for controlling the operation of the mobile terminal 100. The user input unit 130 may be referred to as a key button or a manipulating portion and may operate in a tactile manner. A key button 131 corresponding to the user input unit 130 may be described in more detail below.

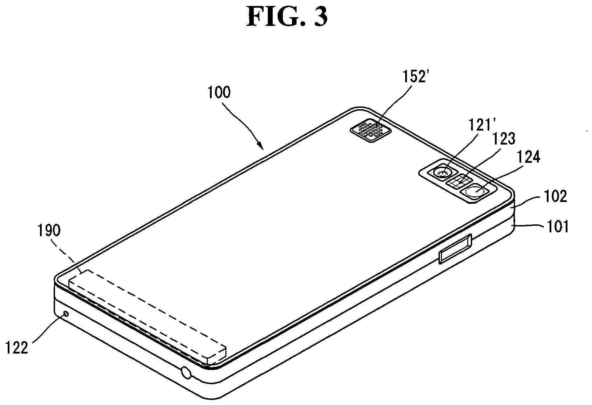

FIG. 3 is a rear perspective view of the mobile terminal 100 shown in FIG. 1. Other embodiments and configurations may also be provided.

Referring to FIG. 3, a camera 121' may be additionally attached to the rear side of the terminal body (i.e., the rear case 102). The camera 121' may have a photographing direction opposite to that of the camera 121 (shown in FIG. 2) and may have pixels different from those of the camera 121 (FIG. 2).

For example, it is desirable that the camera 121 has low pixels such that it may capture an image of the face of a user and transmit the image to a receiving part in case of video telephony while the camera 121' has high pixels because it captures an image of a general object and does not immediately transmit the image in many cases. The cameras 121 and 121' may be attached to the terminal body such that they can be rotated or pop-up.

A flash bulb 123 and a mirror 124 may be additionally arranged in proximity to the camera 121'. The flash bulb 123 may light an object when the camera 121' takes a picture of the object. The mirror 124 may be used for the user to look at his/her face in the mirror when the user wants to self-photograph himself/herself using the camera 121'.

An audio output unit 152' may be additionally provided on the rear side of the terminal body. The audio output unit 152' may achieve a stereo function with the audio output unit 152 (shown in FIG. 2) and may be used for a speaker phone mode when the terminal is used for a telephone call.

A broadcasting signal receiving antenna 124 may be additionally attached to the side of the terminal body in addition to an antenna for telephone calls. The antenna 124 (constructing a part of the broadcasting receiving module 111 shown in FIG. 1) may be set in the terminal body such that the antenna 124 can be pulled out of the terminal body.

The power supply 190 for providing power to the mobile terminal 100 may be set in the terminal body. The power supply 190 may be included in the terminal body or may be detachably attached to the terminal body.

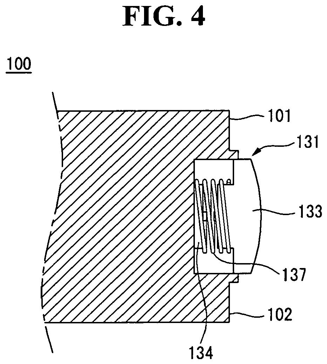

FIG. 4 is a cross-sectional view of the key button 131 (shown in FIG. 1). Referring to FIG. 4, the mobile terminal 100 may include the key button 131 attached to one of the sides of the bodies 101 and 102. The key button 131 can be provided to one side of the mobile terminal 100. For example, the key button 131 can be provided at a point where the user's forefinger is naturally located when the user grips the mobile terminal 100 with his/her left hand. The key button 131 may also be provided to a top or a bottom of the mobile terminal 100 where the user can conveniently use the key button 131.

The key button 131 may classify a pressure applied thereto by the user into one of at least three different levels and output the corresponding levels. For example, the key button 131 may output a first level corresponding to no pressure, a second level corresponding to a maximum pressure and a third level corresponding to a level between the first level and the second level. The key button 131 may linearly sense the pressure applied thereto by the user and output a level corresponding to the pressure. The key button 131 may include an external button 133, a switch 134, and a spring 137 to provide an elastic force between the external button 133 and the switch 134.

The external button 133 may be a portion that directly comes into contact with a user's finger. The external button 133 may be subjected to various processes to improve emotional quality for fingers. For example, a shape, a curved surface and/or a surface roughness of the external button 133 may vary.

The switch 134 may come into contact with a bottom of the external button 133 to generate an electric signal. For example, when the user presses the external button 133, the bottom of the external button 133 presses the top of the switch 134 such that the switch 134 generates an electric signal corresponding to the pressing operation. Further, the switch 134 may generate an electric signal depending on the degree of pressure applied thereto by the user. For example, an electric signal generated at the moment when the external button 133 comes into contact with the switch 134 can be different from an electric signal generated while the external button 133 and the switch 134 keep in contact with each other after they come into contact with each other. The switch 134 may be a Hall effect switch using a Hall effect. That is, the switch 134 can sense a magnetism variation due to a change in the distance between the external button 133 and the switch 134 as a pressure is applied to the switch 134 and may generate an electric signal based on the magnetism variation.

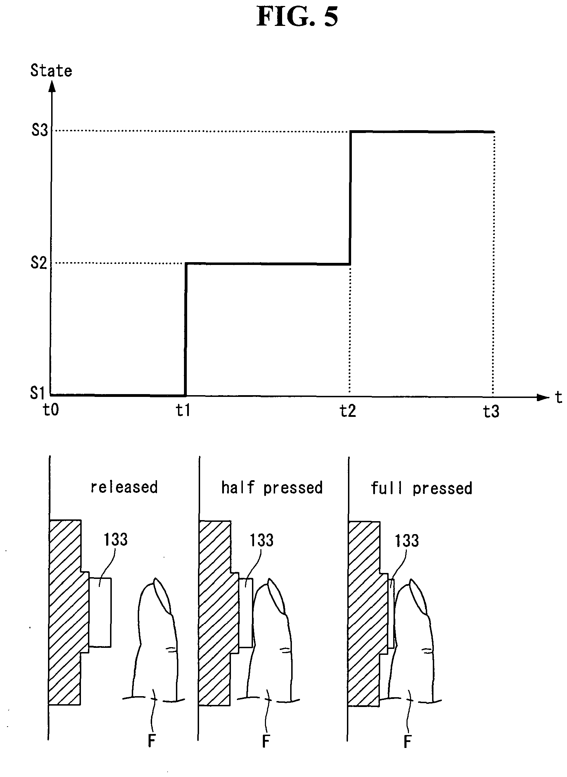

FIG. 5 is a graph illustrating an operation of the key button 131 shown in FIG. 4. Referring to FIG. 5, the mobile terminal 100 can generate a signal based on the operating state of the external button 133.

The external button 133 can generate signals in three states (or levels) based on a user's operation. For example, the external button 133 may generate a signal in a state S1 in a period from t0 to t1 during which the external button 133 is not pressed. The external button 133 may generate a signal in a second state S2 in a period from t1 to t2 during which the user half-presses the external button 133 with a finger F. The external button 133 may generate a signal in a third state S3 in a period from t2 to t3 during which the user fully presses the external button 133 with finger F.

The signal states S1, S2 and S3 may be discontinuous. That is, discontinuous signals can be generated based on a degree to which the external button 133 is pressed.

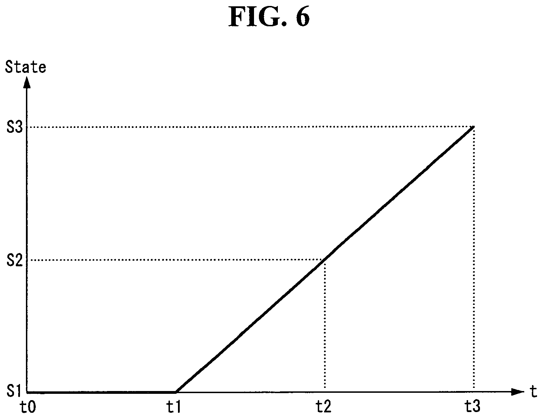

FIG. 6 is a graph illustrating an operation of the key button 131 shown in FIG. 4. Referring to FIG. 6, the key button 131 shown in FIG. 4 may linearly sense a user's pressure applied thereto.

The key button 131 may generate the signal in the first state S1 during a period from t0 to t1 in which there is no user's pressure applied to the key button 131. The user's pressure applied to the key button 131 may gradually increase during a period from t1 to t3. As the user's pressure gradually increases, the key button 131 shown in FIG. 4 may continuously sense a pressure variation. The controller 180 (shown in FIG. 1) that senses the continuously increasing signal can generate the signals in second and third states S2 and S3 when the user's pressure reaches specific levels.

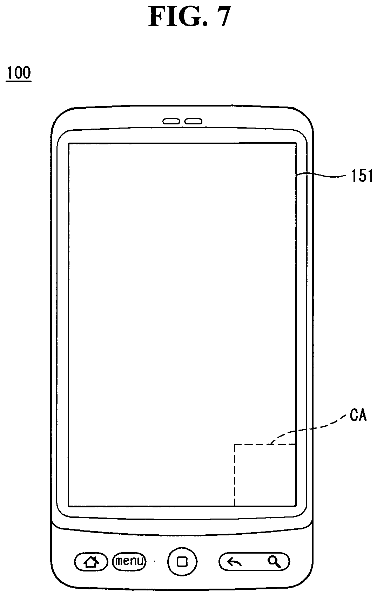

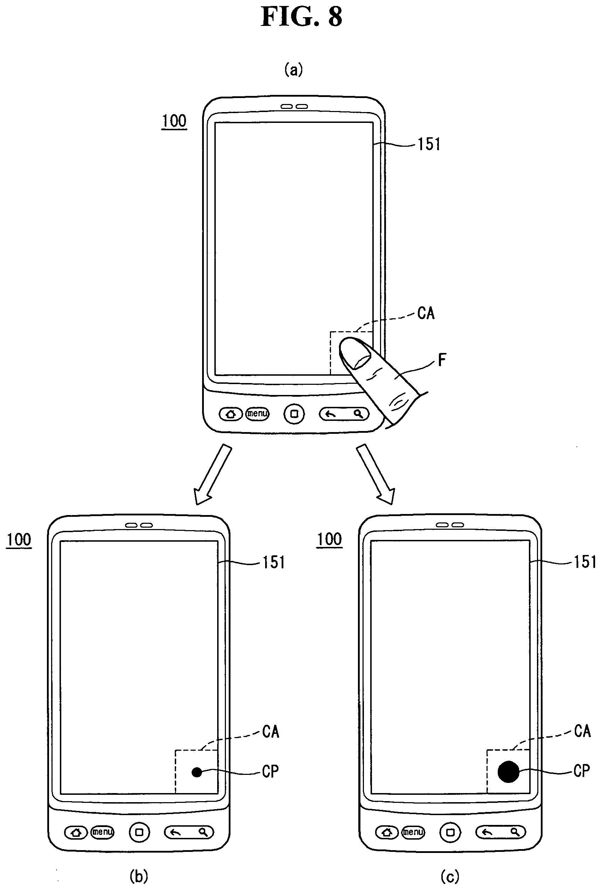

FIGs. 7 and 8 illustrate a user input operation of the mobile terminal 100 according to an embodiment. Other embodiments may also be provided. Referring to FIGs. 7 and 8, the mobile terminal 100 may receive a user's input through a sensing area of the display 151. That is, the mobile terminal 100 may sense a user's pressure applied thereto without having an additional physical button provided to the mobile terminal 100.

The sensing area CA may be an appropriate region of the display 151. For example, the sensing area CA may be at a bottom and a right of the display 151 such that the user can easily touch the sensing area CA with a right hand while gripping the mobile terminal 100 with a left hand. Additionally, the user can set the sensing area CA to a position most suitable for the user.

A pressure sensor layer capable of sensing a user's pressure may be provided to the sensing area CA or to the bottom of the display 151. That is, when the user presses the display 151, pressure(s) applied to the display 151 may deform the pressure sensor layer so as to sense the user's pressure.

Referring to FIG. 8 (a), the user may touch the sensing area CA of the display 151 with a finger F (or other pointing device). The controller 180 may generate a signal based on a strength of the user's touch.

In FIG. 8 (b), a touch point CP for the sensing area CA may be displayed in a small size, which means that the user presses the display 151 with a relatively small force. In this example, the controller 180 may determine that there is a light touch of the user. That is, the controller 180 may determine that the user's touch corresponds to the signal S2 shown in FIG. 5.

In FIG. 8 (c), the touch point CP for the sensing area CA is displayed in a large size, which means that the user presses the display 151 with a relatively large force. In this example, the controller 180 may determine that there is a powerful touch of the user. That is, the controller 180 may determine that the user's touch corresponds to the signal S3 shown in FIG. 5.

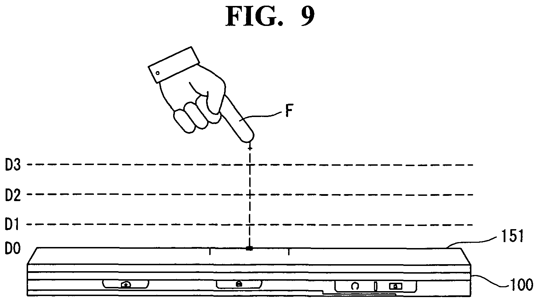

FIG. 9 illustrates a user input operation of the mobile terminal (FIG. 1) according to an embodiment. Other embodiments and configurations may also be provided. Referring to FIG. 9, the mobile terminal 100 may sense a proximity touch applied thereto to acquire a user's input.

When a pointer such as a user's finger F approaches the display 151, the proximity sensor located inside or near the touch screen may sense the approach and output a proximity signal. The proximity sensor can be constructed such that it outputs a proximity signal according to a distance between the pointer approaching the touch screen and the touch screen (referred to as a proximity depth).

The distance in which the proximity signal is output when the pointer approaches the touch screen is referred to as a detection distance. The proximity depth may be known by using a plurality of proximity sensors having different detection distances and comparing proximity signals respectively output from the proximity sensors.

FIG. 9 shows a section of the touch screen in which proximity sensors capable of sensing three proximity depths are arranged. Proximity sensors capable of sensing less than three proximity depths or more than four proximity depths may be arranged in the touch screen.

More specifically, when the pointer completely comes into contact with the touch screen (D0), it may be recognized as a contact touch. When the pointer is provided within a distance D1 from the touch screen, it may be recognized as a proximity touch of a first proximity depth. When the pointer is provided in a range between the distance D1 and a distance D2 from the touch screen, it may be recognized as a proximity touch of a second proximity depth. When the pointer is provided in a range between the distance D2 and a distance D3 from the touch screen, it may be recognized as a proximity touch of a third proximity depth. When the pointer is provided at longer than the distance D3 from the touch screen, it may be recognized as a cancellation of a proximity touch.

The controller 180 may recognize or determine the proximity touch as various input signals according to the proximity distance and proximity position of the pointer with respect to the touch screen, and the controller 180 may perform various operation controls according to the input signals. That is, when the user's finger F approaches the display 151, the controller 180 may determine that the signal in the third state S3 (shown in FIG. 5) is applied to the display 151. When the user's finger F becomes distant from the display 151, the controller 180 may determine that the signal in the second state S is applied to the display 151. Further, when the user's finger F is completely apart from the display 151, the controller 180 may determine that the signal in the first state S1 is applied to the display 151.

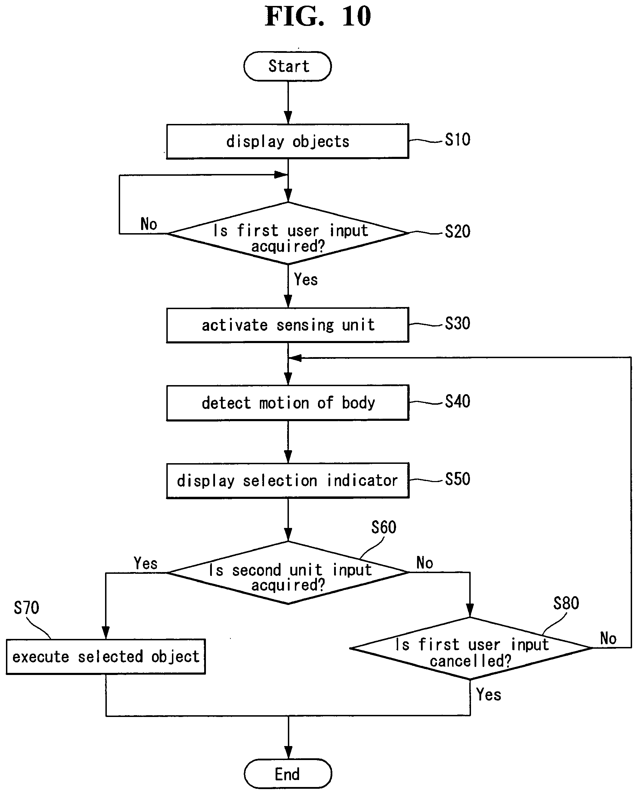

FIG. 10 is a flowchart showing an operation of the mobile terminal 100 shown in FIG. 1. Other operations or orders of operations may also be provided. Referring to FIG. 10, the controller 180 may display a plurality of objects in operation S10.

The objects may be information visually displayed on the display 151. For example, various icons displayed on the wallpaper and various contents visually displayed when a specific application is executed can be the objects. Further, the objects may include a selection indicator and an indicator displayed when a specific icon is selected. When the mobile terminal 100 is booted (or rebooted) and executed, the mobile terminal 100 may display various objects on the display 151 unless the mobile terminal 100 enters an idle mode and the display 151 is turned off.

The controller 180 may determine whether a first user input is received in operation S20. The first user input may be an input signal generated according to an operation of the key button 131 (FIG. 1). That is, the first user input may be an input signal generated when the user presses the key button 131. More particularly, the first user input may be an input signal generated when the key button 131 is half-pressed (i.e., an input signal corresponding to the signal in the second state S2 as shown in FIG. 5).

Upon receiving (or acquired) the first user input, the controller 180 may activate the sensing unit 140 in operation S30. The sensing unit 140 may sense various states of the mobile terminal 100. The whole part or a specific module of the entire sensing unit 140 may be activated or inactivated. That is, the controller 180 may control operations of the sensing unit 140 to effectively use battery power. When the first user input corresponding to a half press input signal applied to the key button 131 is sensed, the controller 180 can activate the whole or part of the sensing unit 140.

When the sensing unit 140 is activated, the controller 180 may detect or sense a motion of the body of the mobile terminal in operation S40. A motion of the body can reflect a user's motion applied to the mobile terminal 100. For example, if the user who is gripping the mobile terminal 100 moves his or her hand, this user's motion can correspond to a motion of the body of the mobile terminal 100.

A motion of the body can be detected or sensed through the posture sensor 141 included in the sensing unit 140. The posture sensor 141 may sense the current state of the mobile terminal 100, such as the opening/closing state, position, orientation and acceleration/deceleration of the mobile terminal 100 and whether the user comes into contact with the mobile terminal 100, etc., and the posture sensor 141 generates a sensing signal for controlling the operation of the mobile terminal 100.

The posture sensor 141 can sense a rotating speed or an angular speed based on a rotation of the mobile terminal 100 using a gyroscope. Further, the posture sensor 141 can sense acceleration of gravity based on a motion of the mobile terminal 100 using an accelerometer. Additionally, the posture sensor 141 can sense orientation of the mobile terminal 100 using a geomagnetic sensor.

The posture sensor 141 can sense a motion of the mobile terminal 100 based on at least one of the angular speed sensed through the gyroscope, the acceleration of gravity sensed through the accelerometer and/or the orientation of the mobile terminal 100 sensed through the geomagnetic sensor. For example, when the mobile terminal 100 rotates on an axis passing through the body of the mobile terminal 100 in the vertical or horizontal direction, the posture sensor 141 can sense a tilting state of the mobile terminal 100, which includes a tilting degree, a tilting speed and/or a tilting direction of the body of the mobile terminal 100.

When the motion of the body of the mobile terminal 100 is detected, the controller 180 may display a selection indicator in operation S50. The selection indicator may be an indicator for a currently focused region. When objects are displayed on the display 151, for example, the selection indicator may correspond to a portion that can visually indicate an object selected from the objects. Further, the selection indicator can indicate an activated object. For example, an object indicated by the selection indicator may be considered to be in a state that the object may be immediately executed based on a user's choice or a control signal of the controller 180.

The selection indicator can move on the display 151 based on a motion of the body of the mobile terminal 100. That is, the controller 180 may change the location of the selection indicator based on a value acquired through the posture sensor 141. For example, if the mobile terminal 100 is tilted to the right, the posture sensor 141 can sense the tilting of the mobile terminal 100. The controller 180 can change the location of the selection indicator such that the location of the selection indicator corresponds to the tilting of the mobile terminal 100.

The selection indicator may include a specific selected area. If the selection indicator has a rectangular shape, for example, an inside area of the rectangular shape can be considered to be selected by the selection indicator.

The controller 180 may determine whether a second user input is acquired in operation S60. The second user input may be an input signal generated based on an operation of the key button 131. That is, the second user input may be an input signal generated when the user presses the key button 131. More particularly, the second user input may be an input signal generated when the key button 131 is fully pressed. That is, the second user input may correspond to the signal in the third state S3 as shown in FIG. 5.

When an input signal corresponding to the state S3 (FIG. 5) is generated, the controller 180 may execute an operation corresponding to a selected object in operation S70. If the second user input is an input signal corresponding to the third state S3 (FIG. 5), it can be considered that the user has the intention of selecting a specific object. That is, it can be considered that the user tilts the mobile terminal 100 to a desired direction to change the location of the selection indicator so as to locate the selection indicator on a specific object and then strongly presses the key button 131 to execute the specific object. Accordingly, the controller 180 can execute an operation corresponding to the object.

When the second user input is not acquired (or received), the controller 180 may determine whether the first user input is cancelled in operation S80.

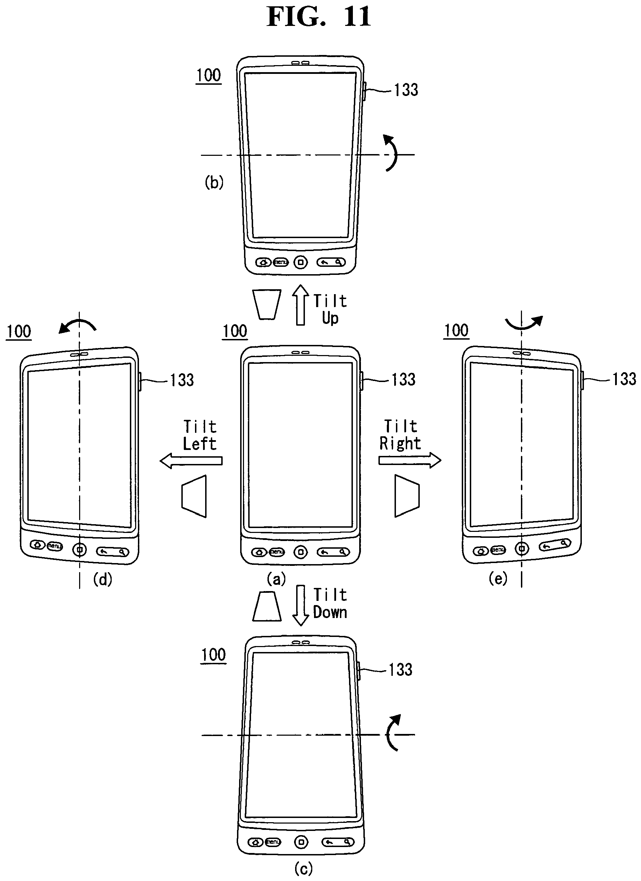

FIG. 11 illustrates motions of the mobile terminal 100. The mobile terminal 100 may sense a tilt of the body thereof.

Referring to FIG. 11 (a), the mobile terminal 100 may be located in parallel with a specific reference plane.

Referring to FIG. 11 (b), the user can lift the upper part of the mobile terminal 100. That is, the user can lift the upper part of the mobile terminal 100 and lower the lower part thereof based on a horizontal central axis. This operation may hereafter be referred to as a tilt up.

Referring to FIG. 11 (c), the user can lift the lower part of the mobile terminal 100. That is, the user can lift the lower part of the mobile terminal 100 and lower the upper part thereof based on the horizontal central axis. This operation may hereafter be referred to as a tilt down.

Referring to FIG. 11 (d), the user can lift the right side of the mobile terminal 100. That is, the user can lift the right side of the mobile terminal 100 and lower the left side thereof based on a vertical central axis. This operation may hereafter be referred to as a tilt left,

Referring to FIG. 11 (e), the user can lift the left side of the mobile terminal 100. That is, the user can lift the left side of the mobile terminal 100 and lower the right side thereof based on the vertical central axis. This operation may hereafter be referred to as a tilt right.

As shown in FIGs. 11 (a) through (e), the user can tilt the body of the mobile terminal 100 to a specific direction and this tilting motion can be sensed by the posture sensor 141. Further, the posture sensor 141 can sense the tilting motion when the key button 131 is half-pressed or fully pressed. That is, the posture sensor 141 may sense a motion of the mobile terminal 100 from when the key button 131 is pressed, and thus a function corresponding to the motion of the mobile terminal 100 can be executed.

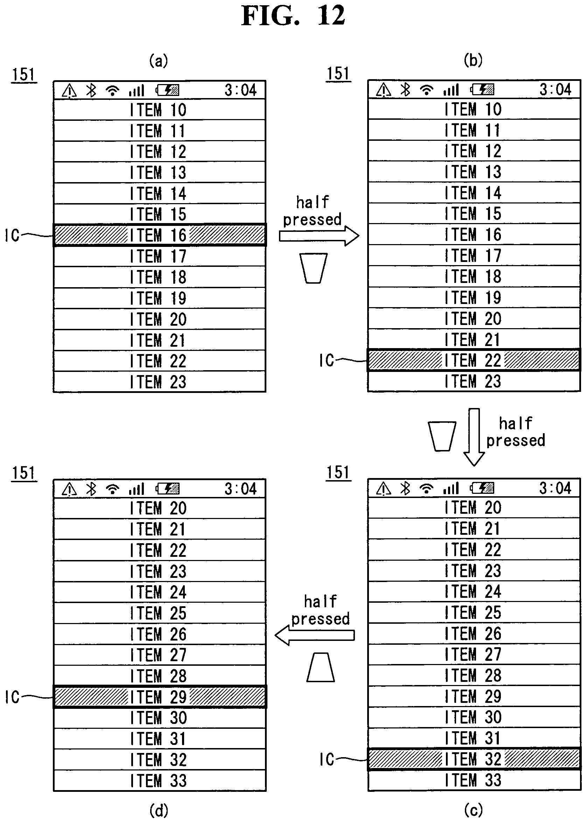

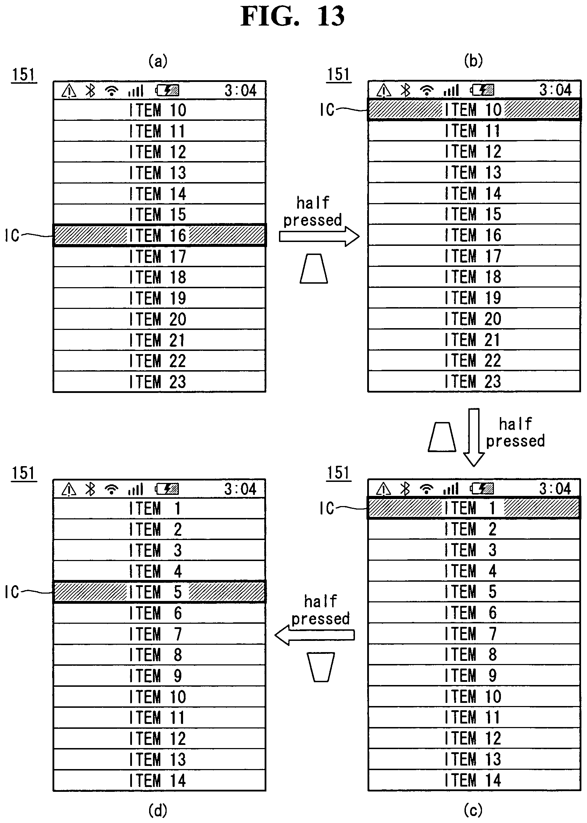

FIGs. 12 and 13 are views for showing operations (FIG. 10) of the mobile terminal according to an embodiment. Other embodiments and configurations may also be provided. The controller 180 can select a specific item from among items displayed on the display 151 through a motion of tilting the body of the mobile terminal 100.

Referring to FIG. 12 (a), the display 151 may display items arranged in the vertical direction. The selection indicator IC can be provided on a specific one of the arranged items. The selection indicator IC can indicate that ITEM 16 is currently selected. The selection indicator IC can display the area in which ITEM 16 is displayed differently from other areas such that the user can easily recognize ITEM 16.

Referring to FIG. 12 (b), the user can perform a 'tilt up' motion while half-pressing the key button 131. When the user half-presses the key button 131, the posture sensor 141 can sense the 'tilt up' motion, as described above. When the 'tilt up' motion is made with the key button 131 half-pressed, the controller 180 can control the selection indicator IC to be sequentially moved downward.

Referring to FIG. 12 (c), if the half-pressing of the key button 131 and the 'tilt up' motion are maintained, the selection indicator IC may be continuously moved downward.

Referring to FIG. 12 (d), the user can change the 'tilt up' motion to the 'tilt down' motion while half-pressing the key button 131. When the half-pressing of the key button 131 and the 'tilt down' motion are maintained, the selection indicator IC can be moved upward.

Referring to FIG. 13 (a), the selection indicator IC can be currently located on ITEM 16.

Referring to FIG. 13 (b), the user can maintain the 'tilt down' motion while half-pressing the key button 131. Accordingly, the selection indicator IC can be continuously moved upward.

Referring to FIG. 13 (c), if the user maintains the 'tilt down' motion while half-pressing the key button 131, the selection indicator IC can be moved to the top item in the item list displayed on the display 151.

Referring to FIG. 13 (d), the user can tilt up the mobile terminal 100 while half-pressing the key button 131. Then, the controller 180 can control the selection indicator IC to be moved downward.

When the item that the user wants to execute (or the operation corresponding to the object) is ITEM 5, the user can fully press the key button 131 while the selection indicator IC is located on ITEM 5. When the key button 131 is fully pressed, the controller 180 can execute a specific function according to the attribute of ITEM 5 corresponding to a selected object. If ITEM 5 is an image, for example, functions of enlarging, reducing and editing the image can be executed. When ITEM 5 is a moving picture or a sound source, playing, stopping and fast winding functions can be executed. Additionally, the controller 180 can execute an appropriate function depending on the selected object.

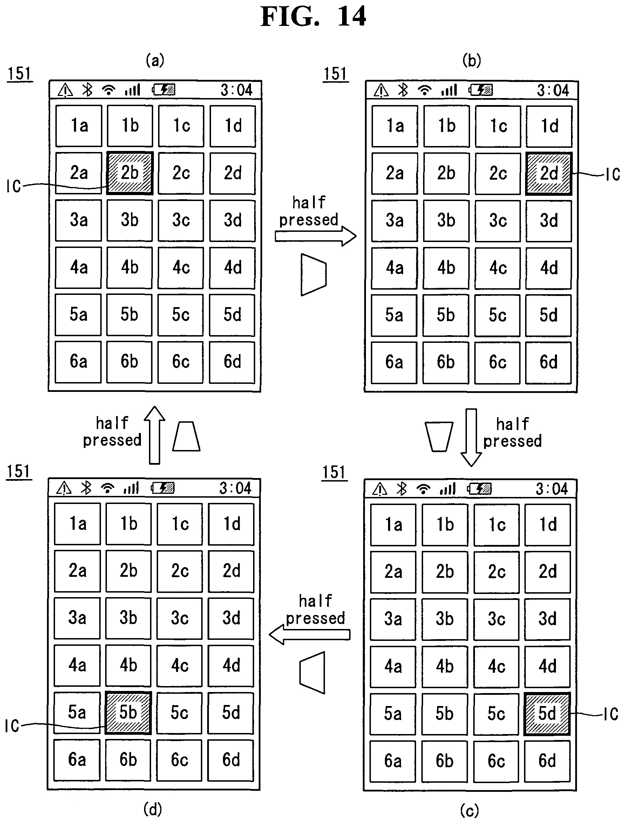

FIG. 14 is a view for explaining operations (FIG. 10) of the mobile terminal 100 according to an embodiment. Other embodiments and configurations may also be provided. Objects may be displayed on the display 151 in various forms.

Referring to FIG. 14 (a), the selection indicator IC can be located on an object 2b.

Referring to FIG. 14 (b), the user can make the 'tilt right' motion while half-pressing the key button 131. When the key button 131 is half-pressed, the posture sensor 141 can sense the motion of the mobile terminal 100. Accordingly, the selection indicator IC can be moved to the right of the display 151 based on an object. That is, the selection indicator IC can be moved from the object 2b to an object 3c and moved from the object 2c to an object 2d.

Referring to FIG. 14 (c), the user can make a 'tilt up' motion while half-pressing the key button 131. Then, the selection indicator IC can be sequentially moved down to the bottom of the display 151.

Referring to FIG. 14 (d), the user can make a 'tilt left' motion while half-pressing the key button 131. Then, the selection indicator IC can be moved to the left of the display 151.

Referring back to FIG. 14 (a), when the user makes a 'tilt down' motion while half-pressing the key button 131, the selection indicator IC can be returned to the initial location.

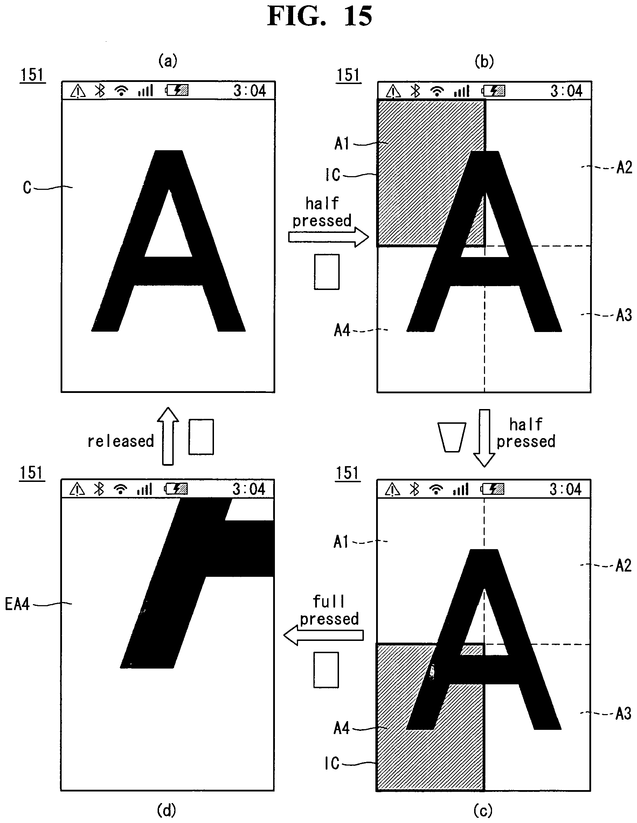

FIG. 15 illustrates operations (FIG. 10) of the mobile terminal 100 according to an embodiment. Other embodiments and configurations may also be provided. The controller 180 can select a specific area in a single object based on a set unit.

Referring to FIG. 15 (a), the display 151 may display image contents C.

Referring to FIG. 15 (b), the user can half-press the key button 131. When the user half-presses the key button 131, the display 151 can display the selection indicator IC. The selection indicator IC may be displayed in a first area A from among first, second, third and fourth areas A1, A2, A3 and A4. The first, second, third and fourth areas A1, A2, A3 and A4 may be defined by a predetermined method. The dotted line that divides the display area of the display 151 into the first, second, third and fourth areas A1, A2, A3 and A4 may not be displayed. The selection indicator IC may be located in the first area A.

Referring to FIG. 15 (c), the user may make a 'tilt up' motion while half-pressing the key button 131. The controller 180 can move the selection indicator IC down to the bottom of the display 151.

Referring to FIG. 15 (d), the user can fully press the key button 131. The motion of fully pressing the key button 131 may correspond to a function of enlarging the area where the selection indicator IC is currently located and displaying the enlarged area. Accordingly, the controller 180 may display an image EA4 obtained by enlarging the fourth area A4.

Referring back to FIG. 15 (a), the user can stop pressing the key button 131. Accordingly, there is no input through the key button 131. That is, the key button 131 is released. If there is no input through the key button 131, the executed function can be returned, and thus the display 151 can display the initially displayed image C.

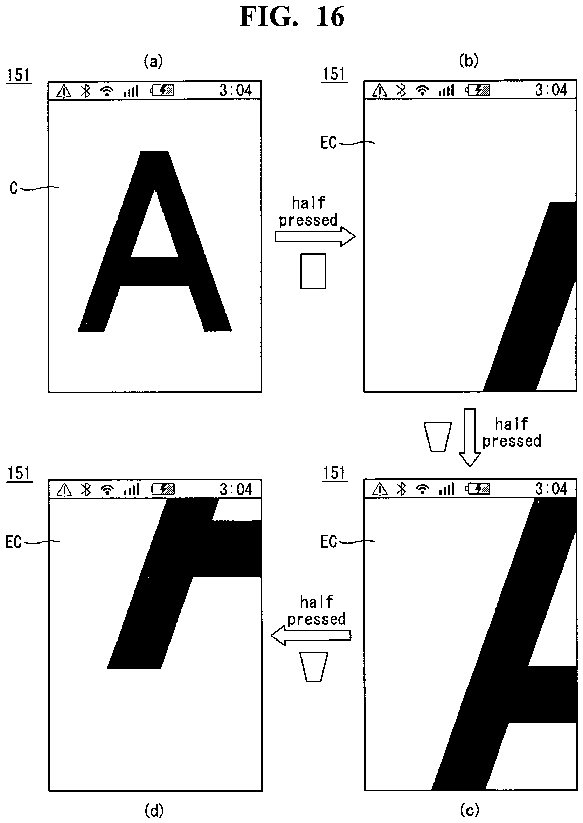

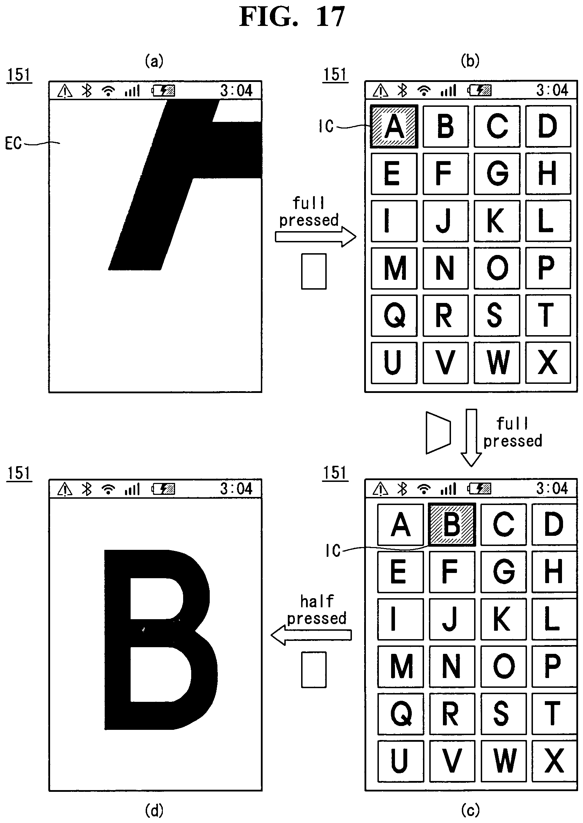

FIGs. 16 and 17 are views for explaining operations (FIG. 10) of the mobile terminal 100 according to an embodiment. Other embodiments and configurations may also be provided. The mobile terminal 100 can execute different functions by half-pressing and fully pressing the key button 131.

Referring to FIG. 16 (a), the display 151 may display the image contents C.

Referring to FIG. 16 (b), when the user half-presses the key button 131, an enlarged image EC of the image contents C may be displayed.

Referring to FIGs. 16 (c) and (d), when the user makes a 'tilt up' motion while half-pressing the key button 131, the enlarged image EC may be displayed with the lower display area continuously shifted.

Referring to FIG. 17 (a), the user may tilt up the mobile terminal 100 while half-pressing the key button 131 to maintain the state of displaying the enlarged image EC.

Referring to FIG. 17 (b), the user may fully press the key button 131. When the key button 131 is fully pressed, a list relating to the contents currently displayed on the display 151 can be displayed. For example, if the contents displayed in FIG. 17 (a) correspond to an image included in a specific folder, a list of the image and other images included in the folder can be displayed.

Referring to FIG. 17 (c), the user can make a 'tilt right' motion while fully pressing the key button 131. Accordingly, the selection indicator IC can be moved from 'A' to 'B'.

Referring to FIG. 17 (d), when the user half-presses the key button 131, the controller 180 can display an enlarged image of 'B' on which the selection indicator IC is located.

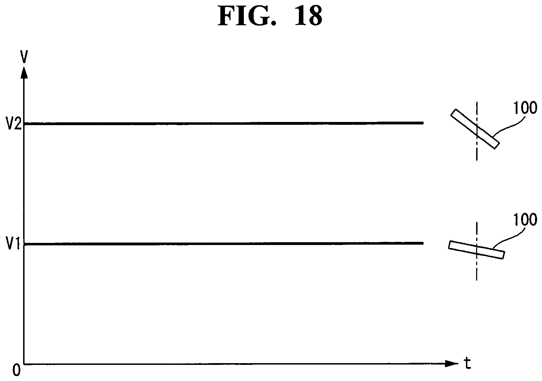

FIG. 18 is a graph showing a moving velocity of a selection indicator based on a tilting degree of the body of the mobile terminal 100.

As shown in FIG. 18, the moving velocity of the selection indicator can depend on the tilting degree of the body of the mobile terminal based on a specific reference plane. The horizontal axis and the vertical axis of the graph shown in FIG. 18 respectively represent time and velocity. The velocity may correspond to the moving velocity of the selection indicator. The moving velocity of the selection indicator may be substantially equal to the changing speed of a selected area included in the selection indicator.

A first velocity V1 is lower than a second velocity V2. When the mobile terminal 100 is tilted at a relatively narrow angle to the horizontal plane corresponding to a reference plane, the selection indicator may be moved at the first velocity V1. When the mobile terminal 100 is tilted at a relatively wide angle to the horizontal plane, the selection indicator may be moved at the second velocity V2.

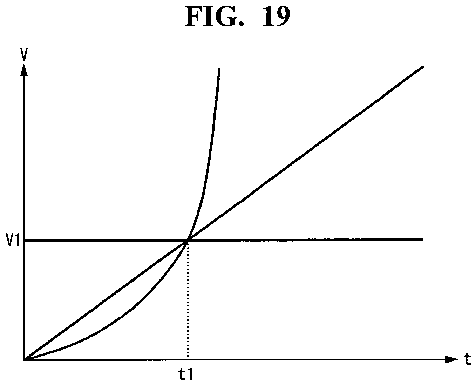

FIG. 19 is a graph illustrating another selection indicator moving velocity based on a tilting degree of the body of the mobile terminal 100. Referring to FIG. 19, the moving velocity of the selection indicator can be determined as various values.

The moving velocity of the selection indicator may be fixed to the first velocity V1. That is, when the mobile terminal 100 is rotated at a specific angle, the selection indicator may move at an equal velocity.

The moving velocity of the selection indicator may be proportional to a time for which the mobile terminal 100 is tilted. That is, when the mobile terminal 100 is rotated at a specific angle, the moving velocity of the selection indicator may gradually increase.

The moving velocity of the selection indicator may abruptly increase as the time for which the mobile terminal 100 is tilted increases. For example, when the mobile terminal 100 is rotated at a specific angle, the selection indicator may be slowly moved in the initial stage and the moving velocity of the selection indicator may sharply increase after a specific time t1, as compared to the above two examples.

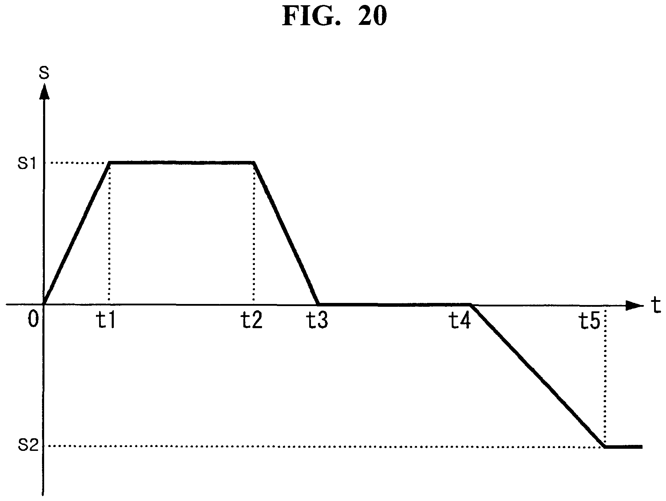

FIG. 20 is a graph illustrating a selection indicator moving distance based on a tilting direction of the body of the mobile terminal 100. Referring to FIG. 20, the moving velocity and direction of the selection indicator may depend on the tilting direction of the body of the mobile terminal 100. The horizontal axis and the vertical axis of the graph shown in FIG. 20 may respectively represent time and a moving distance of the selection indicator.

The user can tilt the mobile terminal 100 to one direction before time t1. When the user tilts the mobile terminal 100 to one direction, the moving distance of the selection indicator toward one direction may gradually increase.

The user can return the tilted mobile terminal 100 to its original position at time t1. When the tilt of the mobile terminal 100 is cancelled, the selection indicator may not move any more, and thus the moving distance of the selection indicator may not increase until time t2.

The user may tilt the mobile terminal 100 in the other direction at time t2. In this example, the selection indicator may move to the initial position thereof.

The user can return the tilted mobile terminal 100 to the original position at time t3. Accordingly, the moving distance of the selection indicator may not increase until time t4.

The user can tilt the mobile terminal 100 in the other direction again at t4. Accordingly, the selection indicator may be continuously moved until time t5 when the tilted mobile terminal 100 returns to its original position.

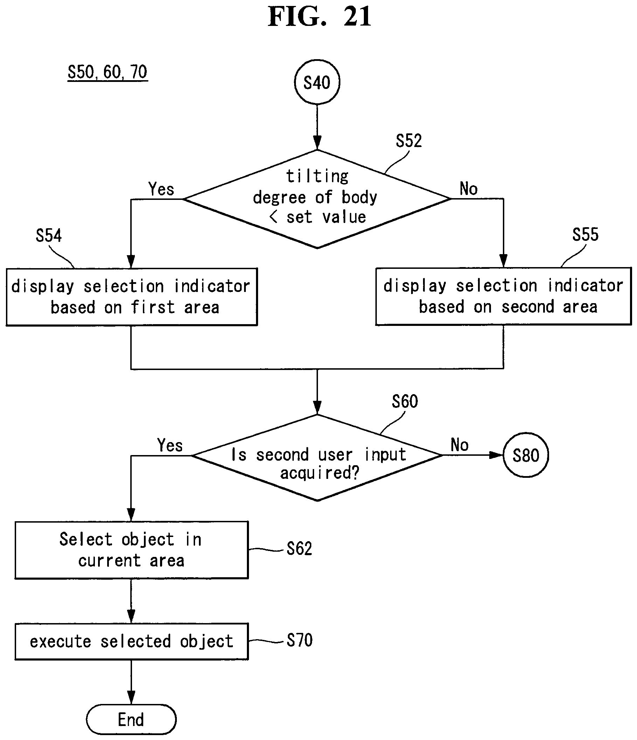

FIG. 21 is a flowchart illustrating operations S50, S60 and S70 shown in FIG. 10. Other operations and orders of operations may also be provided.

Referring to FIG. 21, the controller 180 may compare the tilting degree of the body of the mobile terminal 100 with a set value in operation S52. The tilting degree of the body of the mobile terminal 100 may correspond to a degree to which the body of the mobile terminal 100 is tilted with respect to a specific reference plane. The specific reference plane may be a locating state of the mobile terminal 100 at a specific time. For example, if the mobile terminal 100 is being tilted at 30° relative to a ground surface at time t0, the plane tilted 30° relative to the ground surface can be the reference plane. Accordingly, when the mobile terminal 100 is tilted at 35° relative to the ground surface at time t1, the controller 180 can determine that the location of the mobile terminal 100 is changed by 5°.

The set value may be stored in the memory 160. The set value may be a critical dimension.

The selection indicator may be displayed based on a first area unit when the tilting degree of the body of the mobile terminal 100 is less than the set value in operation S54. The selection indicator may be displayed based on a second area unit when the tilting degree of the body of the mobile terminal 100 is greater than the set value in operation S55.

The first and second area units may be the range of a selected area (i.e., the range of an area selected by the selection indicator). The width of the first area unit may be less than the width of the second area unit. The first area unit may include a single object and the second area unit may include multiple objects when objects are arranged in a lattice form, for example.

The first and second area units may be determined based on an object. That is, the first and second area units can be determined such that the first and second area units include objects displayed on the display without traversing the objects.

The controller 180 may determine whether the second unit input is acquired (or received) in operation S60 and select an object in the current area in operation S62.

When the tilting degree of the body of the mobile terminal 100 is greater than the set value, the selection indicator can include multiple objects. A specific object may be selected from the objects included in the selection indicator when the second user input (e.g. fully pressing the key button 131) is received.

When the specific object is selected, the controller 180 may execute an operation corresponding to the selected object in operation S70.

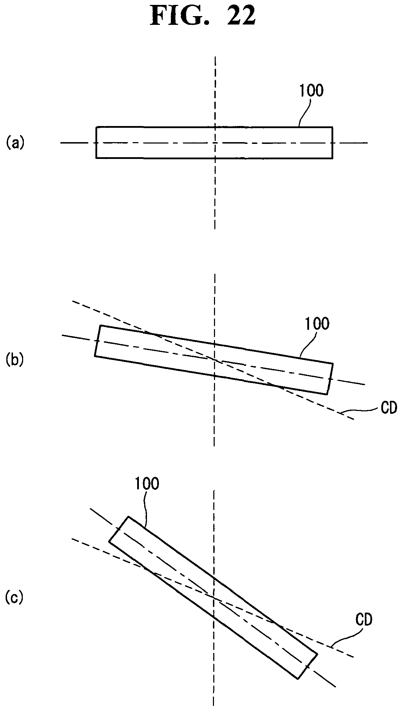

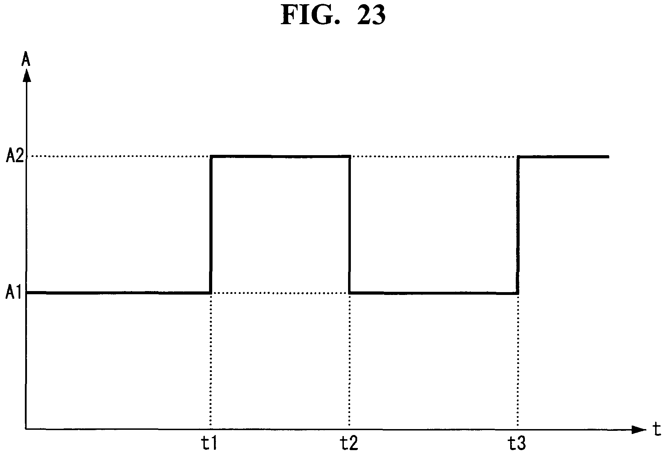

FIG. 22 illustrates tilting degrees of the body of the mobile terminal 100 in a graph illustrating a variation in a selected area based on a tilting degree of the body of the mobile terminal 100. As shown in FIGs. 22 and 23, the range of a selected area may change based on a tilting degree of the mobile terminal 100 with respect to a reference plane.

Referring to FIG. 22 (a), the reference plane may be set based on a specific time.

Referring to FIGs. 22 (b) and (c), tilting degrees of the mobile terminal 100 with respect to the set value CD corresponding to the critical dimension can be sensed by the posture sensor 141. FIG. 22 (b) shows that the tilting degree of the mobile terminal 100 does not reach the set value CD, and FIG. 22 (c) shows that the tilting degree of the mobile terminal 100 exceeds the set value CD.

Referring to FIG. 23, the range of a selected area can vary based on the tilting degree of the mobile terminal 100. The vertical axis of the graph shown in FIG. 23 represents the width A of an area included in the selection indicator at a specific time. The width A1 may be narrower than the width A2.

The width of the area included in the selection indicator before time t1 may be the width A1. In other words, the width of the area included in the selection indicator is the width A1 when the mobile terminal 100 is tilted to the degree shown in FIG. 22 (b).

The user can increase the tilting degree of the mobile terminal 100 at time t1. That is, the user can tilt the mobile terminal 100 to the degree shown in FIG. 22 (c). In this example, the tilting degree of the mobile terminal 100 exceeds the set value CD, and thus the width of the selected area included in the selection indicator can increase to the width A2.

The user can decrease the tilting degree of the mobile terminal 100 at time t2. Accordingly, the width of the selected area included in the selection indicator can decrease to the width A1.

The user can increase the tilting degree of the mobile terminal 100 again at time t3. Accordingly, the selected area included in the selection indicator can increase to the width A2 again.

The range of the selected area may dynamically change based on the tilting degree of the mobile terminal 100, and thus the user may search displayed objects more conveniently. Although FIGs. 22 and 23 illustrate a variation in the range of the selected area based on the tilting angle of the mobile terminal 100 against the reference plane, the range of the selected area can also change based on a time for which tilting of the mobile terminal 100 against the reference plane is maintained. For example, if the mobile terminal 100 is tilted for a long time even though the tilting angle of the mobile terminal 100 against the reference plane is narrow, the range of the selected area can increase.

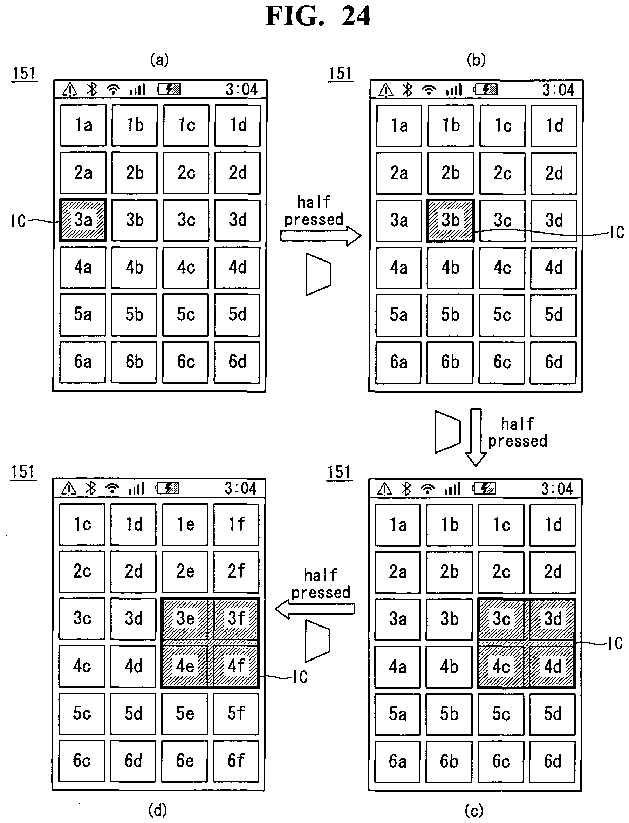

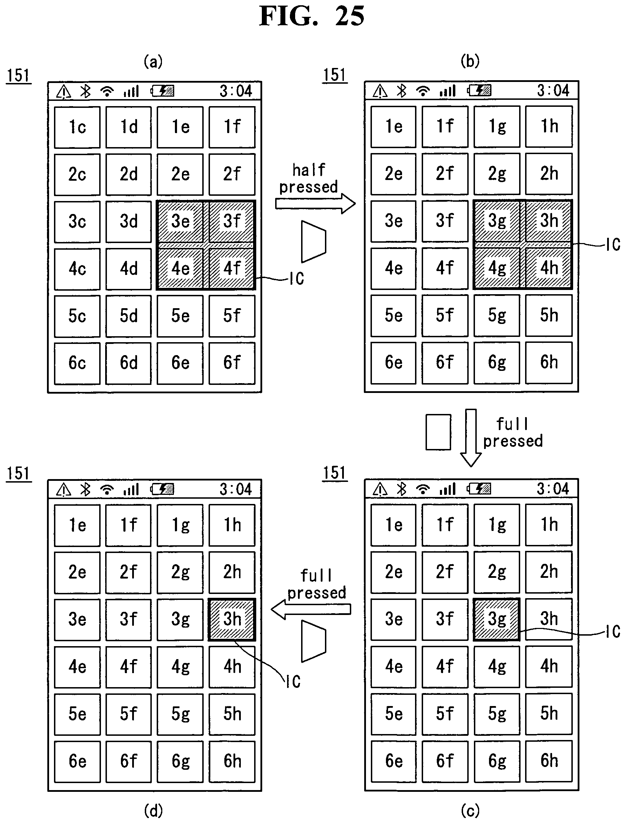

FIGs. 24 and 25 illustrate a variation in the selected area according to a tilting degree of the mobile terminal 100. Referring to FIGs. 24 and 25, the range of the selected area included in the selection indicator may change.

Referring to FIG. 24 (a), the selection indicator IC can include an object 3a. That is, the selected area may correspond to the object 3a.

Referring to FIG. 24 (b), the user may make a 'tilt right' motion while half-pressing the key button 131. The controller 180 may move the selection indicator IC from the object 3a to an object 3b.

Referring to FIG. 24 (c), the user may make a 'tilt right' motion while half-pressing the key button 131. The tilting angle of the mobile terminal 100 tilted to the right may increase and the tilting angle may exceed the set value. Otherwise, a time during which the mobile terminal 100 is being tilted to the right may exceed the set value.

When the tilting angle or the tilting time of the mobile terminal 100 exceeds the set value, the controller 180 may increase the range of the selected area. That is, the size of the selection indicator IC can increase. Accordingly, the size of the selection indicator IC may increase such that the selection indicator IC includes objects 3a, 3d, 4c and 4d, as shown in FIG. 24 (c), while only the object 3b is selected in FIG. 24 (b).

Referring to FIG. 24 (d), the user may make a 'tilt right' motion while half-pressing the key button 131. In this example, the selection indicator IC is moved in the tilting direction and selects objects 3e, 3f, 4e and 4f.

Referring to FIG. 25 (a), the selection indicator IC may include the objects 3e, 3f, 4e and 4f.

Referring to FIG. 25 (b), the user may make a 'tilt right' motion while half-pressing the key button 131. In this example, the selection indicator IC may be moved in the tilting direction by the range of selected area.

Referring to FIG. 25 (c), the user may fully press the key button 131. When the key button 131 is fully pressed, the controller 180 can return the magnified range of the selected area to the initial state. For example, the selection indicator IC (including the four objects) may be changed to the selection indicator IC including a single object. That is, operating the key button 131 may be a factor that changes the range of the selected area in addition to the tilting angle and tilting maintenance time.

Referring to FIG. 25 (d), the user may make a 'tilt right' motion while fully pressing the key button 131. The selection indicator IC may move in the tilting direction by the range of the selected area.

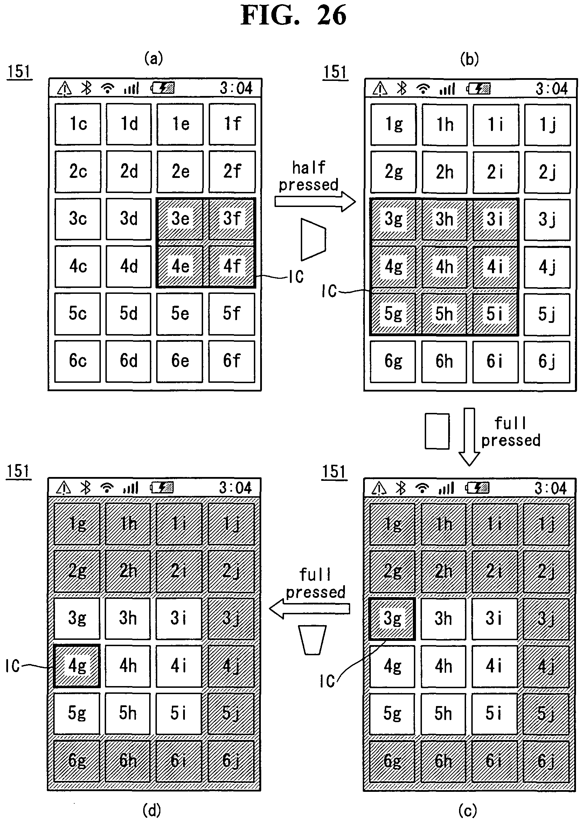

FIG. 26 illustrates another variation in the selected area based on a tilting degree of the mobile terminal 100. Referring to FIG. 26, the mobile terminal 100 may select an object included in the range of the selected area.

Referring to FIG. 26 (a), the selection indicator IC indicating the range of the selected area may include the objects 3e, 3f, 4e and 4f.

Referring to FIG. 26 (b), the user may make a 'tilt right' motion while half-pressing the key button 131. The tilting degree or tilting time of the mobile terminal 100 may exceed the set value to increase the range of the selected area.

Referring to FIG. 26 (c), the user may fully press the key button 131. When the key button 131 is fully pressed, the controller 180 can select one of the objects included in the range of the selected area before the key button 131 is fully pressed. For example, the controller 180 may select one of objects 3g, 3h, 3i, 4g, 4h, 4i, 5g, 5h and 5i. The size of the selection indicator IC may be reduced.

Referring to FIG. 26 (d), when the user makes a 'tilt up' motion while fully pressing the key button 131, the selection indicator IC can be moved in the area including the objects 3g, 3h, 3i, 4g, 4h, 4i, 5g, 5h and 5i.

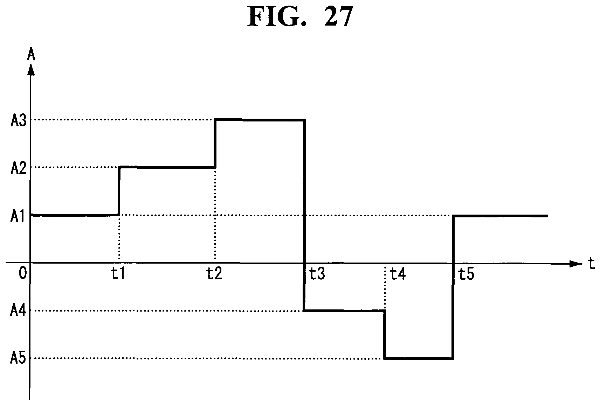

FIG. 27 is a graph showing a variation in the selected area based on the tilting degree and the tilting time of the body of the mobile terminal.

As shown in FIG. 27, the mobile terminal 100 can change the range of the selected area based on the tilting degree and/or the tilting time of the body of the mobile terminal 100. Further, the range of the selected area can be changed when the tilting direction of the mobile terminal 100 varies.

More specifically, the range of the selected area may correspond to A1 before the time t1.

When the tilting degree or the tilting time of the mobile terminal 100 exceeds the set value at time t1, the range of the selected area can increase to A2.

When the tilting degree or tilting time of the mobile terminal 100 exceeds the set value at time t2, the range of the selected area can increase to A3.

When the tilting direction of the mobile terminal 100 is changed at time t3, the range of the selected area can be changed to A4.

When the tilting degree or the tilting time of the mobile terminal 100 exceeds the set value at time t4, the range of the selected area can increase to A5.

When the tilting direction of the mobile terminal 100 is changed at time t5, the range of the selected area can change to A1.

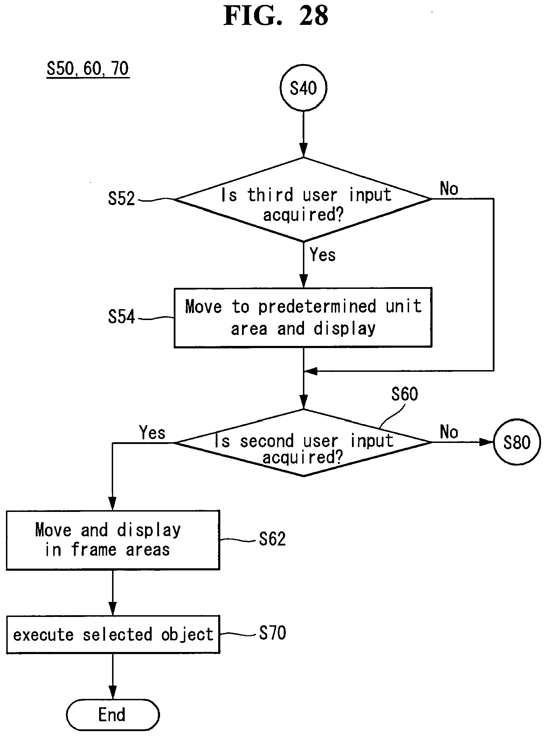

FIG. 28 is a flowchart illustrating operations S50, S60 and S70 (FIG. 10). The controller 180 may determine whether a third user input is acquired (or received) in operation S52.

The third user input may be a snap motion that moves the mobile terminal 100 in one direction within a time shorter than a set value or moves the mobile terminal 100 in one direction within the time shorter than the set value and then returns the mobile terminal 100 to the initial position. That is, the third user input may be a motion of shaking the mobile terminal 100 for a short time.

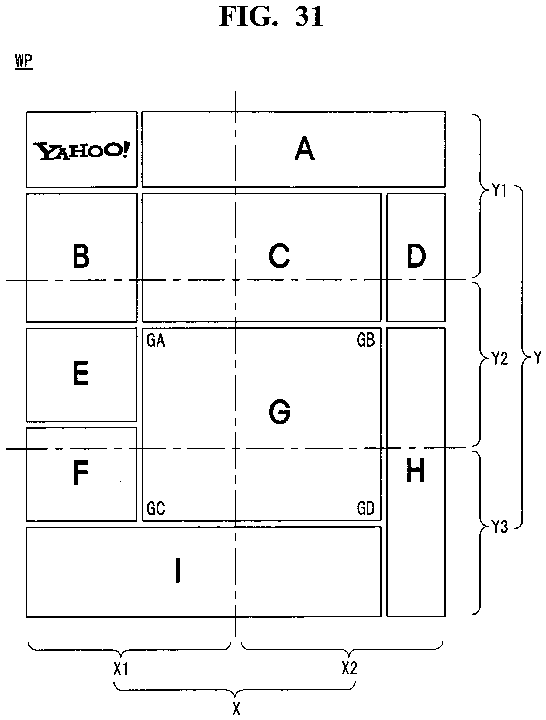

When the third user input is acquired or received, the controller 180 may move the contents displayed on the display 151 to predetermined unit areas and display the contents in the predetermined unit areas in operation S54. The predetermined unit areas may be areas obtained by splitting the contents, for example, a web page WP shown in FIG. 31, in such a manner that split areas are fitted to the size of the display 151. When the horizontal definition of the display 151 is 600, for example, the web page WP in a size of 1800, shown in FIG. 31, may be split into three unit areas each of which has a size of 600.

When the snap motion corresponding to the third user input is inputted, the controller 180 may move the web page WP (shown in FIG. 31), displayed on the display 151, to the predetermined unit areas and display the web page WP (shown in FIG. 31) in the predetermined unit areas.

When the second user input is acquired or received in operation S60, the controller 180 may move the web page WP (shown in FIG. 31) in frame areas and display the web page WP (shown in FIG. 31) in the frame areas in operation S62 and execute a selected object in operation S70.

The second unit input may be a motion of tilting the mobile terminal 100 to a specific direction. The frame areas may be areas divided based on frames included in the web page WP (shown in FIG. 31). The web page WP (shown in FIG. 31) may be composed of multiple frames divided by tags. For example, the web page WP (shown in FIG. 31) may be composed of a frame that includes an image, a frame including an explanation of the image, etc. A single frame may form a single context.

When the mobile terminal 100 is tilted in a specific direction, the web page WP (shown in FIG. 31) can be moved and displayed based on the frame areas. Accordingly, the user can acquire or receive information without ceasing of context. Although information is displayed based on the frame areas of the web page WP (shown in FIG. 31) in the embodiment, other contents are not limited to the web page WP (shown in FIG. 31) when the information can be divided into specific units.

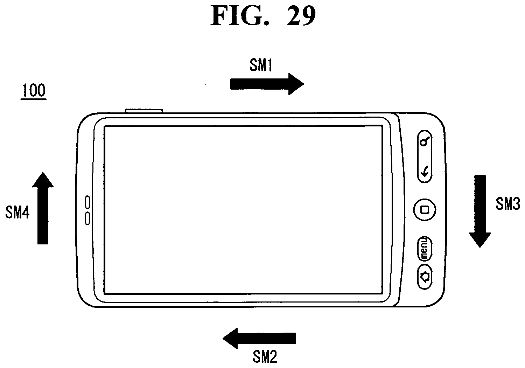

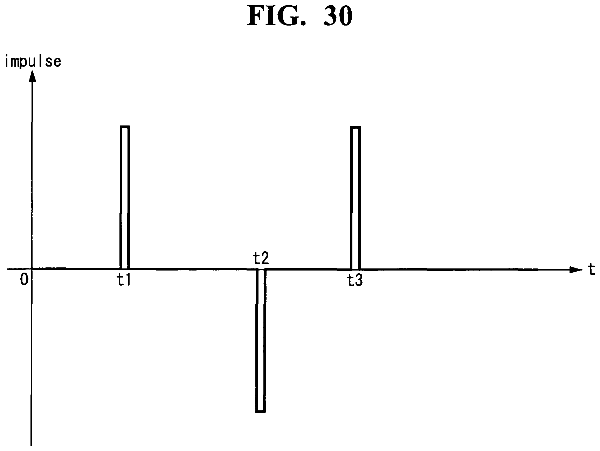

FIG. 29 illustrates the third user input of the mobile terminal 100, described with reference to FIG. 28. FIG. 30 is a graph illustrating a sensing result of the sensing unit according to the third user input of the mobile terminal 100. The mobile terminal 100 may sense a user's snap motion.

Referring to FIG. 29, the snap motion may be a motion of powerfully shaking the mobile terminal 100 to one of first, second, third and fourth snap directions SM1, SM2, SM3 and SM4 for a very short time.

Referring to FIG. 30, when the user make the snap motion, the posture sensor 141 can sense instantaneous impulse. That is, it may be known from the graph shown in FIG. 30 that the user makes a short and powerful snap motion in one direction or the other direction at times t1, t2 and t3. The direction of the snap motion as well as generation of the snap motion may be sensed, and thus the controller 180 may change the display of the web page WP (shown in FIG. 31) in the direction of the snap motion.

FIG. 31 shows the web page WP that will be displayed on the display 151 of the mobile terminal 100. Referring to FIG. 31, the mobile terminal 100 may divide the web page WP into areas. The areas may be classified into the predetermined unit areas and frame areas.

The predetermined unit areas may be obtained by partitioning the web page WP based on the definition of the display 151. That is, the web page WP may be divided into unit areas X1-Y1, X1-Y2, X2-Y2, X1-Y3 and X2-Y3. The predetermined frame areas can display an image most suitable for the definition of the display 151. However, contents displayed based on the frame areas may display information of different contexts, and thus the user may not smoothly acquire (or receive) the information.

The frame areas may be obtained by partitioning the web page WP based on the context of information included in the web page WP. That is, the web page WP based on HTML may include several frames (area YAHOO and areas A through I) based on information type and contents. Since the frame areas may not correspond to the definition of the display 151, it may be difficult to display contents based on the frame areas. However, the frame areas may display information having a specific context, and thus the user may smoothly acquire (or receive) information.

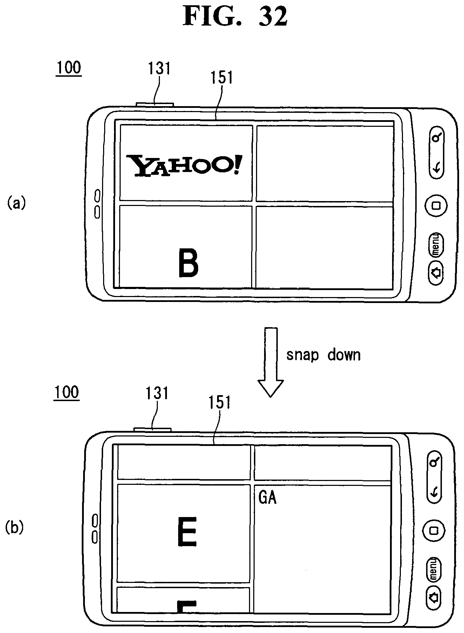

FIGs. 32, 33, 34 and 35 are views for explaining an operation of displaying a web page, according to operations shown in FIG. 28. The mobile terminal 100 may display information based on a user's snap motion and/or a tilting motion.

Referring to FIG. 32 (a), the display 151 may display the predetermined first unit area X1-Y1 of the web page WP (shown in FIG. 31).

Referring to FIG. 32 (b), the user may snap down the mobile terminal 100. That is, the user can shake the mobile terminal 100 down for a very short time. The key button 131 may be in a half-pressed state that may be maintained while a specific motion is performed.

The snap down motion may display the predetermined second unit area X1-Y2 located below the first unit area X1-Y1 (shown in FIG. 31) on the display 151.

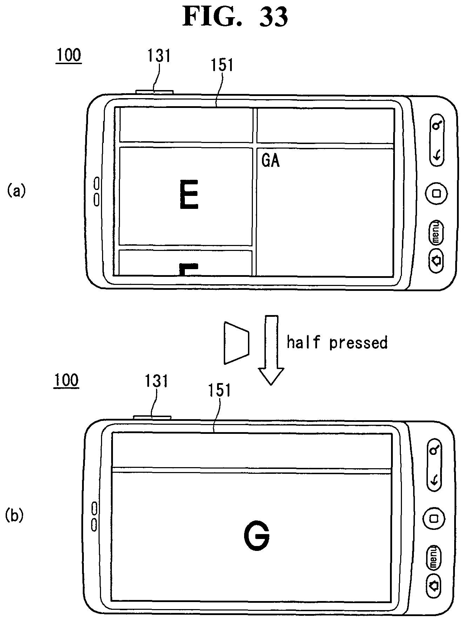

Referring to FIG. 33 (a), the display 151 may display the predetermined second unit area X1-Y2 (shown in FIG. 31).

Referring to FIG. 33 (b), the user may tilt the mobile terminal 100 to the right while half-pressing the key button 131. The controller 180 may display the web page WP (shown in FIG. 31) while continuously shifting the web page WP. That is, the web page WP (shown in FIG. 31) can be displayed with the image shown in FIG. 33 (a) scrolled to the right.

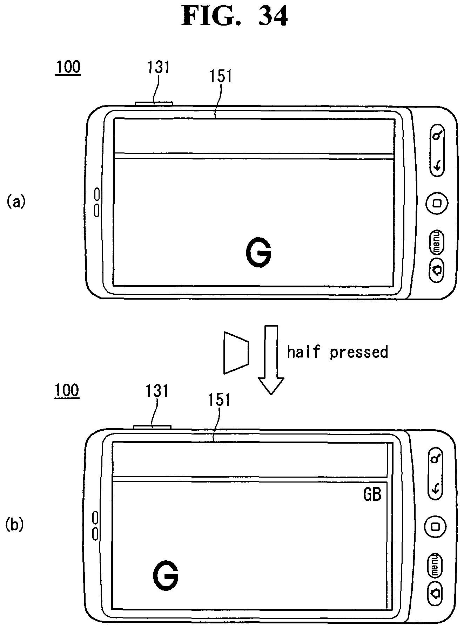

Referring to FIG. 34 (a), the display 151 may display the scrolled image.

Referring to FIG. 34 (b), the user can continue the 'tilt right' motion while half-pressing the key button 131 and the controller 180 can continuously scroll the web page WP (shown in FIG. 31). The web page WP (shown in FIG. 31) can be scrolled in a frame area G. That is, the web page WP (shown in FIG. 31) may not be scrolled any more at the right end of the frame area G even though the user continues the 'tilt right' motion.

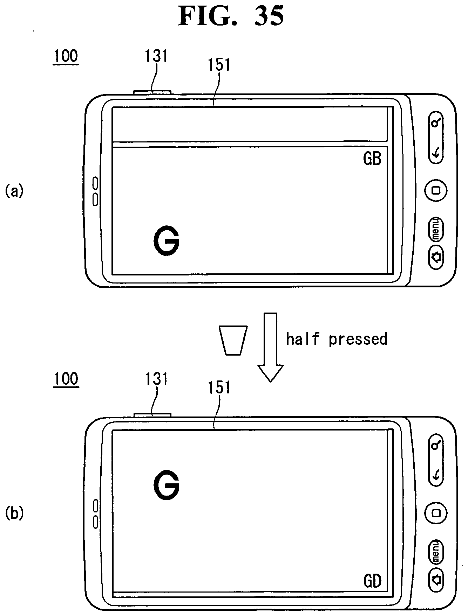

Referring to FIG. 35 (a), the display 151 may display the web page WP (shown in FIG. 31) scrolled to the right end of the frame area G.

Referring to FIG. 35 (b), the user can tilt the mobile terminal 100 up while half-pressing the key button 131 and the controller 180 may scroll the web page WP (shown in FIG. 31) down in the frame area G. When the user makes a snap motion to a specific direction in this state, the displayed image can be moved to a predetermined unit area in the specific direction.

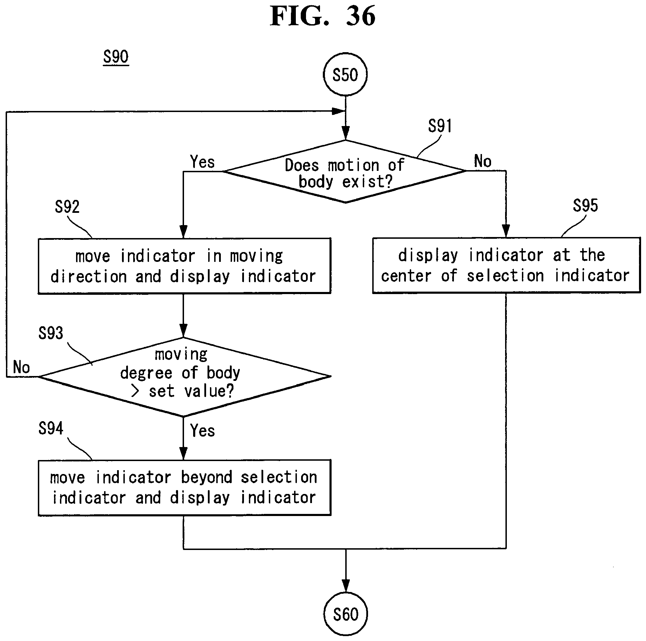

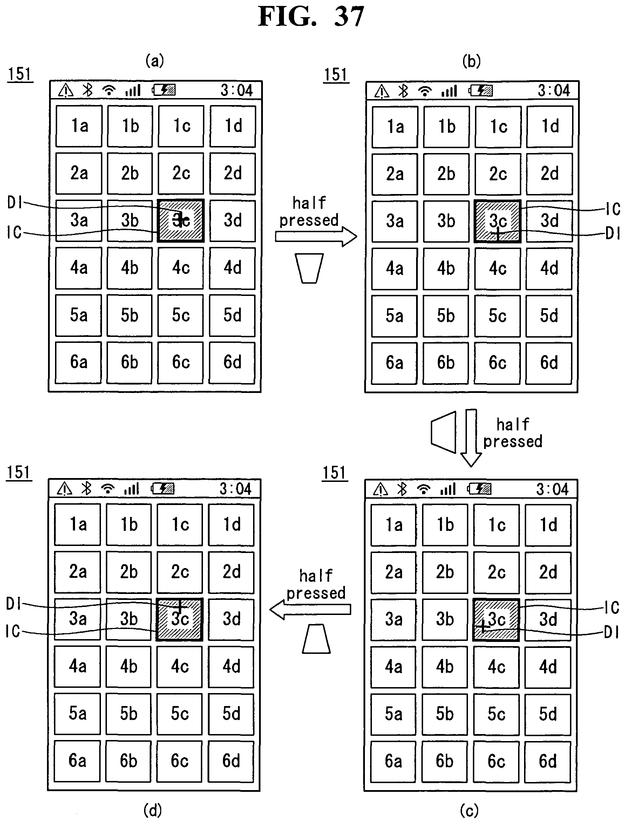

FIG. 36 is a flowchart illustrating an operation S90 of displaying an indicator on the display 151 performing operations shown in FIG. 10. Referring to FIG. 36, the controller 180 may determine whether a motion of the body of the mobile terminal 100 exists in operation S91. When a motion of the body of the mobile terminal 100 exists, the controller 180 may move the indicator DI (shown in FIG. 37) in the direction of the motion and display the indicator DI. The motion of the body may correspond to a motion of the mobile terminal 100.

The indicator DI (shown in FIG. 37) can visually indicate a motion of the mobile terminal 100 prior to the selection indicator IC (shown in FIG. 37). The selection indicator IC (shown in FIG. 37) may be fixed to a specific object until the motion of the mobile terminal 100 reaches a critical dimension. Accordingly, the user may not be aware of whether to correctly operate the mobile terminal 100 before the user applies a motion of greater than the critical dimension to the mobile terminal 100.

The location of the indicator DI (shown in FIG. 37) may be changed even with a motion of less than the critical dimension, which may move the selection indicator IC (shown in FIG. 37). That is, sensitivity of the indicator DI shown in FIG. 37 may be greater than sensitivity of the selection indicator IC shown in FIG. 37. When the posture sensor 141 senses a motion of the body of the mobile terminal 100, for example, the controller 180 can change the location of the indicator DI (shown in FIG. 37).

When there is no motion of the body of the mobile terminal 100, the indicator DI (shown in FIG. 37) can be located at the center of the selection indicator IC (shown in FIG. 37) in operation S95.

When the extent of a motion of the body of the mobile terminal 100 exceeds a set value in operation S93, the indicator DI (shown in FIG. 37) can be moved beyond the selection indicator IC (shown in FIG. 37) and may be displayed in operation S94.

When the extent of a motion of the body of the mobile terminal 100 exceeds the set value, the indicator DI (shown in FIG. 37) can be displayed such that the selection indicator IC (shown in FIG. 37) is deviated from the specific object on which the selection indicator IC is currently located.

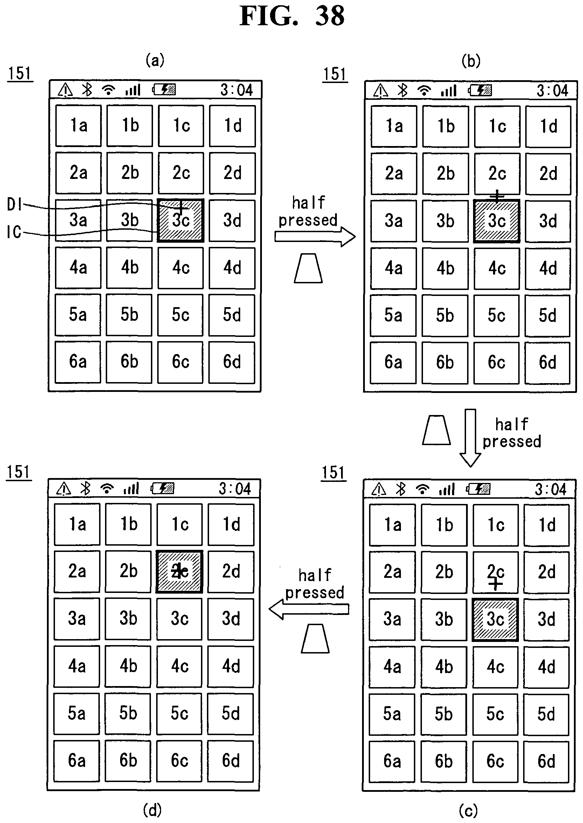

FIGs. 37 and 38 are views for explaining an implementation of an operation of displaying the indicator DI, shown in FIG. 36. The mobile terminal 100 can allow the user to be easily aware of his or her motion by displaying the indicator DI capable of sensitively indicating a motion of the mobile terminal 100.

Referring to FIG. 37 (a), the display 151 may display objects arranged in a lattice form. The selection indicator IC may be located on an object 3c from among the displayed objects. Additionally, the indicator DI may be located at the center of the object 3c.

Referring to FIG. 37 (b), the user may tilt the mobile terminal 100 up while half-pressing the key button 131. The 'tilt up' motion may be made in a relatively small range. When a small motion is applied to the mobile terminal 100, the controller 180 may determine that the motion is not so powerful as to move the selection indicator IC. The controller 180 may move the indicator DI to indicate the direction of the motion to the user.

Referring to FIG. 37 (c), the user can tilt the mobile terminal 100 to the left while half-pressing the key button 131, and thus the indicator DI can be moved to the left.

Referring to FIG. 37 (d), the user can tilt the mobile terminal 100 down while half-pressing the key button 131 and the controller 180 can move the indicator DI upward.

Referring to FIG. 38 (a), the indicator DI may move upward.

Referring to FIG. 38 (b), the user can tilt the mobile terminal 100 down while half-pressing the key button 131. The indicator DI can deviate from the selection indicator IC.

Referring to FIG. 38 (c), the user can continue the 'tilt down' motion while half-pressing the key button 131. The indicator DI can move to the center of an object 2c in close proximity to the indicator DI.

Referring to FIG. 38 (d), the user can continue the 'tilt down' motion while half-pressing the key button 131. The indicator DI can approach the center of the object 2c. When the indicator DI approaches the center of the object 2c to a specific degree, the controller 180 can move the selection indicator IC to the object 2c.

Since the indicator DI is moved before the selection indicator IC is moved, the user can predict the moving direction of the selection indicator IC. While the indicator DI has a cross shape in FIG. 38, the indicator DI may have various forms including a circle, a square, a water drop, etc.

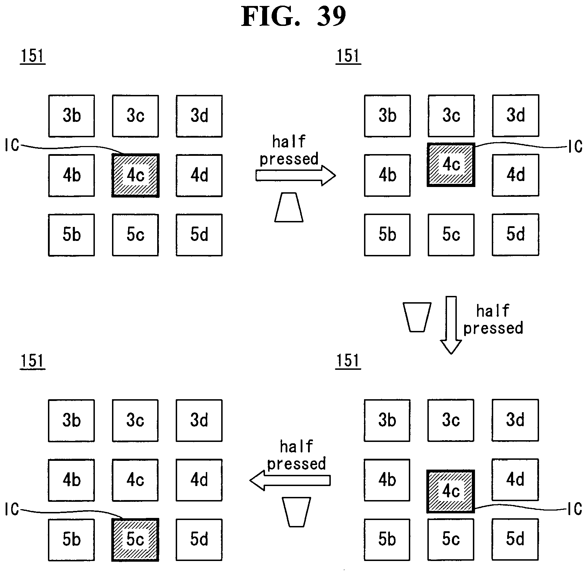

FIG. 39 is a view for explaining another implementation of operations of displaying the indicator (shown in FIG. 36). The controller 180 can display an object such that the object can function as the indicator IC.

Referring to FIG. 39(a), the selection indicator IC can be located on an object 4c.

Referring to FIG. 39(b), the user can tilt the mobile terminal 100 down while half-pressing the key button 131. The controller 180 can move the object 4c upward.

Referring to FIG. 39(c), the user can tilt the mobile terminal 100 up while half-pressing the key button 131 and the controller 180 can move the object 4c downward.

Referring to FIG. 39(d), the user can tilt the mobile terminal 100 up while half-pressing the key button 131. The 'tilt up' motion may be a tilting motion exceeding the critical dimension. Accordingly, the controller 180 can move the selection indicator IC to an object 5c and display the selection indicator IC on the object 5c.

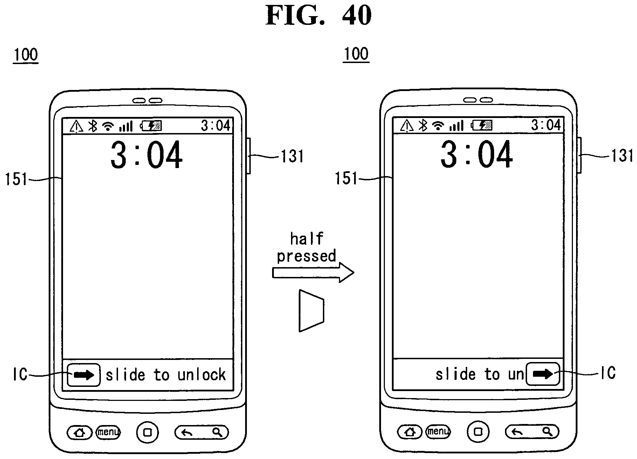

FIG. 40 illustrates another operation of the mobile terminal 100. The mobile terminal 100 may cancel a lock screen through a tilting motion.

Referring to FIG. 40(a), the display 151 may display a lock screen. The lock screen may be cancelled through an operation of selecting the selection indicator IC and dragging the selection indicator IC to the right of the display 151.

Referring to FIG. 40(b), the user can tilt the mobile terminal 100 to the right while half-pressing the key button 131. The selection indicator IC can be moved in the tilting direction. When the selection indicator IC is moved, the controller 180 can cancel the lock screen.

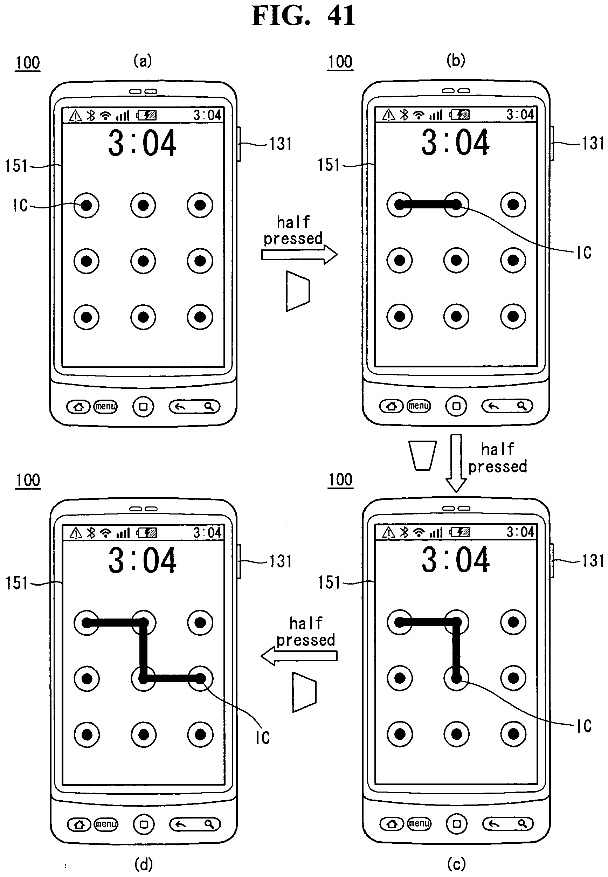

Referring to FIG. 41 (a), the display 151 may display the lock screen on which objects are arranged in a lattice form.

Referring to FIG. 41 (b), the user can tilt the mobile terminal to the right while half-pressing the key button 131. The selection indicator IC can move in the tilting direction. The controller 180 can display the moving trace of the selection indicator IC.

Referring to FIG. 41 (c), the user can tilt the mobile terminal 100 up while half-pressing the key button 131. The selection indicator IC can move in the tilting direction.

Referring to FIG. 41 (d), the user can tilt the mobile terminal 100 to the right while half-pressing the key button 131. When the trace of the user's motion corresponds to one of the traces stored in the memory 160, the controller 180 can cancel the lock state of the mobile terminal 100.

The lock state of the mobile terminal 100 may be cancelled through various methods as well as motions of tilting the body of the mobile terminal 100. For example, the lock state of the mobile terminal 100 may be cancelled based on the time for which the body of the mobile terminal 100 is being tilted to a specific direction or a tilting degree of the body of the mobile terminal 100.

The above-described method of controlling a mobile terminal may be written (or provided) as computer programs and may be implemented in digital microprocessors that execute the programs using a computer readable recording medium. The method of controlling the mobile terminal may be executed through software. The software may include code segments that perform required tasks. Programs or code segments may also be stored in a processor readable medium or may be transmitted according to a computer data signal combined with a carrier through a transmission medium or communication network.

The computer readable recording medium may be any data storage device that can store data that can be thereafter read by a computer system. Examples of the computer readable recording medium may include read-only memory (ROM), random-access memory (RAM), CD-ROMs, DVD±ROM, DVD-RAM, magnetic tapes, floppy disks, optical data storage devices. The computer readable recording medium may also be distributed over network coupled computer systems so that the computer readable code is stored and executed in a distribution fashion.

A mobile terminal may include a first touch screen configured to display a first object, a second touch screen configured to display a second object, and a controller configured to receive a first touch input applied to the first object and to link the first object to a function corresponding to the second object when receiving a second touch input applied to the second object while the first touch input is maintained.

A method may be provided of controlling a mobile terminal that includes displaying a first object on the first touch screen, displaying a second object on the second touch screen, receiving a first touch input applied to the first object, and linking the first object to a function corresponding to the second object when a second touch input applied to the second object is received while the first touch input is maintained. A mobile terminal and a control method thereof may be provided to selectively detect a motion of the body of the mobile terminal at a desired time when a user wants so as to change a selected area, to thereby improve the convenience of use.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to affect such feature, structure, or characteristic in connection with other ones of the embodiments.

## Claims

1. A mobile terminal (100) comprising:
a body;
a display (151) on the body;
a key button (131) on the body to receive a user input; wherein the user input to the key button (131) is one of at least three different levels based on pressure applied to the key button (131), the three different levels include a first level corresponding to no user's pressure, a second level corresponding to a maximum user's pressure, and a third level corresponds to a level between the first level and the second level;
a sensing unit (140) to sense a motion of the body; and
a controller (180) configured to:
display a selection indicator that includes a selected area and change the selected area of the display (151) based on the motion sensed by the sensing unit (140) when the user input corresponds to the third level, and
execute a function corresponding to an object indicated by the selection indicator when the user input corresponds to the second level.

2. The mobile terminal of claim 1, wherein the controller (180) is configured to move the selection indicator in response to a change of the selected area.

3. The mobile terminal of claim 2, wherein the controller (180) is configured to change a location of the selection indicator displayed on the display based on a single one of objects displayed on the display (151) or multiple objects from among the displayed objects.

4. The mobile terminal of claim 1, wherein the motion of the body sensed by the sensing unit (140) corresponds to a tilt of the body.

5. The mobile terminal of claim 1, wherein the controller (180) is further configured to determine a range of a selected area of the display (151) based on a tilting state of the body, sensed by the sensing unit (140), when the user input is received through the key button (131) that corresponds to the second level.

6. The mobile terminal of claim 5, wherein the tilting state includes a tilting angle of the body in a specific direction or a tilting time for which the tilting of the body to the specific direction is maintained.

7. The mobile terminal of claim 1, wherein the controller (180) is further configured to change a web page displayed on the display (151) based on predetermined unit areas or frames of the web page (WP) in response to the motion sensed by the sensing unit (140) when the user input is received through the key button (131) that corresponds to the third level.

8. The mobile terminal of claim 7, wherein the controller (180) is configured to display the web page (WP) based on the frames based on at least one of the tilting direction of the body with respect to a prescribed virtual reference plane or the tilting time of the body.

9. The mobile terminal of claim 1, wherein the controller (180) is further configured to display an indicator indicating a direction of the motion based on the motion sensed by the sensing unit (140) when the user input is received by the key button.

10. The mobile terminal of claim 9, wherein the controller (180) is configured to display a selection indicator that includes a selected area, and the controller (180) is configured to move the selection indicator in response to a shift of the selected area.

11. The mobile terminal of claim 1, wherein the controller (180) is further configured to cancel a lock screen displayed on the display (151) based on the motion sensed by the sensing unit (140) when the user input is received by the key button (131) that corresponds to the third level.

12. The mobile terminal of claim 11, wherein the controller (180) is configured to cancel the lock screen when a trace of a selection indicator moving in at least one direction corresponds to a predetermined trace.

13. A method of controlling a mobile terminal (100), the method comprising:
receiving a user input, wherein the user input to the key button (131) is one of at least three different levels based on pressure applied to the key button (131), the three different levels include a first level corresponding to no user's pressure, a second level corresponding to a maximum user's pressure, and a third level corresponds to a level between the first level and the second level;
sensing a motion of the body of the mobile terminal (100);
displaying a selection indicator that includes a selected area and changing the selected area of a display (151) based on the sensed motion when the user input corresponds to the third level,
executing a function corresponding to an object indicated by the selection indicator when the user input corresponds to the second level.

## Patentansprüche

1. Mobiles Endgerät (100), das Folgendes umfasst:
einen Körper;
eine Anzeige (151) auf dem Körper;
einen Tastenknopf (131) auf dem Körper, um eine Anwendereingabe zu empfangen; wobei die Anwendereingabe auf den Tastenknopf (131) auf der Grundlage des Drucks, der auf den Tastenknopf (131) ausgeübt wird, eine von mindestens drei verschiedenen Stufen ist, wobei die drei verschiedenen Stufen eine erste Stufe, die keinem Druck eines Anwenders entspricht, eine zweite Stufe, die einem maximalen Druck eines Anwenders entspricht, und eine dritte Stufe, die einer Stufe zwischen der ersten Stufe und der zweiten Stufe entspricht, enthalten;
eine Erfassungseinheit (140), um eine Bewegung des Körpers zu erfassen; und
eine Steuereinrichtung (180), die konfiguriert ist:
ein Auswahlkennzeichen anzuzeigen, das einen ausgewählten Bereich enthält, und den ausgewählten Bereich der Anzeige (151) auf der Grundlage der Bewegung, die durch die Erfassungseinheit (140) erfasst wird, zu ändern, wenn die Anwendereingabe der dritten Stufe entspricht, und
eine Funktion auszuführen, die einem Gegenstand entspricht, der durch das Auswahlkennzeichen angegeben wird, wenn die Anwendereingabe der zweiten Stufe entspricht.

2. Mobiles Endgerät nach Anspruch 1, wobei die Steuereinrichtung (180) konfiguriert ist, das Auswahlkennzeichen als Antwort auf eine Änderung des ausgewählten Bereichs zu bewegen.

3. Mobiles Endgerät nach Anspruch 2, wobei die Steuereinrichtung (180) konfiguriert ist, auf der Grundlage eines einzigen der Gegenstände, die auf der Anzeige (151) angezeigt werden, oder von mehreren Gegenständen der angezeigten Gegenstände einen Ort des Auswahlkennzeichens zu ändern, das auf der Anzeige angezeigt wird.

4. Mobiles Endgerät nach Anspruch 1, wobei die Bewegung des Körpers, die durch die Erfassungseinheit (140) erfasst wird, einer Neigung des Körpers entspricht.

5. Mobiles Endgerät nach Anspruch 1, wobei die Steuereinrichtung (180) ferner konfiguriert ist, auf der Grundlage eines Neigungszustands des Körpers, der durch die Erfassungseinheit (140) erfasst wird, einen Bereich einer ausgewählten Fläche der Anzeige (151) zu bestimmen, wenn die Anwendereingabe durch den Tastenknopf (131) empfangen wird, die der zweiten Stufe entspricht.

6. Mobiles Endgerät nach Anspruch 5, wobei der Neigungszustand einen Neigungswinkel des Körpers in einer bestimmten Richtung oder eine Neigungszeit, für die die Neigung des Körpers in der bestimmten Richtung aufrechterhalten wird, umfasst.

7. Mobiles Endgerät nach Anspruch 1, wobei die Steuereinrichtung (180) ferner konfiguriert ist, als Antwort auf die Bewegung, die durch die Erfassungseinheit (140) erfasst wird, eine Internetseite, die auf der Anzeige (151) angezeigt wird, auf der Grundlage von vorgegebenen Einheitsbereichen oder Rahmen der Internetseite (WP) zu ändern, wenn die Anwendereingabe durch den Tastenknopf (131) empfangen wird, die der dritten Stufe entspricht.

8. Mobiles Endgerät nach Anspruch 7, wobei die Steuereinrichtung (180) konfiguriert ist, die Internetseite (WP) auf der Grundlage der Rahmen auf der Grundlage der Neigungsrichtung des Körpers in Bezug auf eine vorgeschriebene, virtuelle Referenzebene und/oder der Neigungszeit des Körpers anzuzeigen.

9. Mobiles Endgerät nach Anspruch 1, wobei die Steuereinrichtung (180) ferner konfiguriert ist, auf der Grundlage der Bewegung, die durch die Erfassungseinheit (140) erfasst wird, ein Kennzeichen anzuzeigen, das eine Richtung der Bewegung anzeigt, wenn die Anwendereingabe durch den Tastenknopf empfangen wird.

10. Mobiles Endgerät nach Anspruch 9, wobei die Steuereinrichtung (180) konfiguriert ist, ein Auswahlkennzeichen anzuzeigen, das einen ausgewählten Bereich enthält, und die Steuereinrichtung (180) konfiguriert ist, das Auswahlkennzeichen als Antwort auf eine Verschiebung des ausgewählten Bereichs zu bewegen.

11. Mobiles Endgerät nach Anspruch 1, wobei die Steuereinrichtung (180) ferner konfiguriert ist, auf der Grundlage der Bewegung, die durch die Erfassungseinheit (140) erfasst wird, einen Sperrbildschirm aufzuheben, der auf der Anzeige (151) angezeigt wird, wenn die Anwendereingabe durch den Tastenknopf (131) empfangen wird, die der dritten Stufe entspricht.

12. Mobiles Endgerät nach Anspruch 11, wobei die Steuereinrichtung (180) konfiguriert ist, den Sperrbildschirm aufzuheben, wenn eine Spur eines Auswahlkennzeichens, das sich in mindestens einer Richtung bewegt, einer vorgegebenen Spur entspricht.

13. Verfahren zum Steuern eines mobilen Endgeräts (100), wobei das Verfahren Folgendes umfasst:
Empfangen einer Anwendereingabe, wobei die Anwendereingabe auf den Tastenknopf (131) auf der Grundlage des Drucks, der auf den Tastenknopf (131) ausgeübt wird, eine von mindestens drei verschiedenen Stufen ist, wobei die drei verschiedenen Stufen eine erste Stufe, die keinem Druck eines Anwenders entspricht, eine zweite Stufe, die einem maximalen Druck eines Anwenders entspricht, und eine dritte Stufe, die einer Stufe zwischen der ersten Stufe und der zweiten Stufe entspricht, enthalten;
Erfassen einer Bewegung des Körpers des mobilen Endgeräts (100);
Anzeigen eines Auswahlkennzeichens, das einen ausgewählten Bereich enthält, und Ändern des ausgewählten Bereichs einer Anzeige (151) auf der Grundlage der erfassten Bewegung, wenn die Anwendereingabe der dritten Stufe entspricht;
Ausführen einer Funktion, die einem Gegenstand entspricht, der durch das Auswahlkennzeichen angegeben wird, wenn die Anwendereingabe der zweiten Stufe entspricht.

## Revendications

1. Terminal mobile (100) comprenant :
un corps ;
un affichage (151) sur le corps ;
un bouton de touche (131) sur le corps pour recevoir une entrée d'utilisateur ; dans lequel l'entrée d'utilisateur sur le bouton de touche (131) est l'un d'au moins trois niveaux différents sur la base d'une pression appliquée sur le bouton de touche (131), les trois niveaux différents incluent un premier niveau correspondant à aucune pression d'utilisateur, un deuxième niveau correspondant à une pression maximale d'utilisateur, et un troisième niveau correspondant à un niveau entre le premier niveau et le deuxième niveau ;
une unité de détection (140) pour détecter un mouvement du corps ; et
un organe de commande (180) configuré pour :
l'affichage d'un indicateur de sélection qui inclut une zone sélectionnée et le changement de la zone sélectionnée de l'affichage (151) sur la base du mouvement détecté par l'unité de détection (140) lorsque l'entrée d'utilisateur correspond au troisième niveau, et
l'exécution d'une fonction correspondant à un objet indiqué par l'indicateur de sélection lorsque l'entrée d'utilisateur correspond au deuxième niveau.

2. Terminal mobile selon la revendication 1, dans lequel l'organe de commande (180) est configuré pour le déplacement de l'indicateur de sélection en réponse à un changement de la zone sélectionnée.

3. Terminal mobile selon la revendication 2, dans lequel l'organe de commande (180) est configuré pour le changement d'un emplacement de l'indicateur de sélection affiché sur l'affichage sur la base d'un seul d'objets affichés sur l'affichage (151) ou de multiples objets parmi les objets affichés.

4. Terminal mobile selon la revendication 1, dans lequel le mouvement du corps détecté par l'unité de détection (140) correspond à une inclinaison du corps.

5. Terminal mobile selon la revendication 1, dans lequel l'organe de commande (180) est en outre configuré pour la détermination d'une plage d'une zone sélectionnée de l'affichage (151) sur la base d'un état d'inclinaison du corps, détecté par l'unité de détection (140), lorsque l'entrée d'utilisateur est reçue par l'intermédiaire du bouton de touche (131) qui correspond au deuxième niveau.

6. Terminal mobile selon la revendication 5, dans lequel l'état d'inclinaison inclut un angle d'inclinaison du corps dans un sens spécifique ou un temps d'inclinaison pendant lequel l'inclinaison du corps dans le sens spécifique est maintenue.

7. Terminal mobile selon la revendication 1, dans lequel l'organe de commande (180) est en outre configuré pour le changement d'une page Web affichée sur l'affichage (151) sur la base de zones unitaires ou de cadres prédéterminés de la page Web (WP) en réponse au mouvement détecté par l'unité de détection (140) lorsque l'entrée d'utilisateur est reçue par l'intermédiaire du bouton de touche (131) qui correspond au troisième niveau.

8. Terminal mobile selon la revendication 7, dans lequel l'organe de commande (180) est configuré pour l'affichage de la page Web (WP) sur la base des cadres sur la base d'au moins l'un du sens d'inclinaison du corps par rapport à un plan de référence virtuel prescrit ou du temps d'inclinaison du corps.

9. Terminal mobile selon la revendication 1, dans lequel l'organe de commande (180) est en outre configuré pour l'affichage d'un indicateur indiquant un sens du mouvement sur la base du mouvement détecté par l'unité de détection (140) lorsque l'entrée d'utilisateur est reçue par le bouton de touche.

10. Terminal mobile selon la revendication 9, dans lequel l'organe de commande (180) est configuré pour l'affichage d'un indicateur de sélection qui inclut une zone sélectionnée, et l'organe de commande (180) est configuré pour déplacer l'indicateur de sélection en réponse à un déplacement de la zone sélectionnée.

11. Terminal mobile selon la revendication 1, dans lequel l'organe de commande (180) est en outre configuré pour annuler un écran de verrouillage affiché sur l'affichage (151) sur la base du mouvement détecté par l'unité de détection (140) lorsque l'entrée d'utilisateur est reçue par le bouton de touche (131) qui correspond au troisième niveau.

12. Terminal mobile selon la revendication 11, dans lequel l'organe de commande (180) est configuré pour annuler l'écran de verrouillage lorsqu'une trace d'un indicateur de sélection se déplaçant dans au moins un sens correspond à une trace prédéterminée.

13. Procédé de commande d'un terminal mobile (100), le procédé comprenant :
la réception d'une entrée d'utilisateur, dans lequel l'entrée d'utilisateur sur le bouton de touche (131) est l'un d'au moins trois niveaux différents sur la base de la pression appliquée sur le bouton de touche (131), les trois niveaux différents incluent un premier niveau correspondant à aucune pression d'utilisateur, un deuxième niveau correspondant à une pression maximale d'utilisateur, et un troisième niveau correspondant à un niveau entre le premier niveau et le deuxième niveau ;
la détection d'un mouvement du corps du terminal mobile (100) ;
l'affichage d'un indicateur de sélection qui inclut une zone sélectionnée et le changement de la zone sélectionnée d'un affichage (151) sur la base du mouvement détecté lorsque l'entrée d'utilisateur correspond au troisième niveau ; et
l'exécution d'une fonction correspondant à un objet indiqué par l'indicateur de sélection lorsque l'entrée d'utilisateur correspond au deuxième niveau.
